(19) Europäisches Patentamt
European Patent Office
Office européen des brevets

(11) **EP 2 523 240 A1**

(12) **EUROPEAN PATENT APPLICATION**
published in accordance with Art. 153(4) EPC

(43) Date of publication:
**14.11.2012 Bulletin 2012/46**

(51) Int Cl.:
*H01M 4/525* (2010.01)  *C01G 53/00* (2006.01)
*H01M 4/131* (2010.01)  *H01M 4/36* (2006.01)
*H01M 4/485* (2010.01)  *H01M 4/505* (2010.01)
*H01M 10/052* (2010.01)

(21) Application number: **11731859.2**

(22) Date of filing: **07.01.2011**

(86) International application number:
**PCT/JP2011/050210**

(87) International publication number:
**WO 2011/083861 (14.07.2011 Gazette 2011/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.06.2010  JP 2010138447**
**08.01.2010  JP 2010003187**

(71) Applicant: **Mitsubishi Chemical Corporation**
**Chiyoda-ku**
**Tokyo 100-8251 (JP)**

(72) Inventors:
• **TAKANO Shoji**
**Ibaraki 300-0332 (JP)**
• **SHIZUKA Kenji**
**Ibaraki 300-0332 (JP)**
• **KUSANO Tomohiro**
**Ibaraki 300-0332 (JP)**
• **KIM Jungmin**
**Ibaraki 300-0332 (JP)**
• **KIJIMA Masato**
**Ibaraki 300-0332 (JP)**

(74) Representative: **Vossius & Partner**
**Siebertstrasse 4**
**81675 München (DE)**

(54) **POWDER FOR POSITIVE ELECTRODE MATERIAL FOR LITHIUM SECONDARY BATTERY AND PROCESS FOR PRODUCTION THEREOF, AND POSITIVE ELECTRODE FOR LITHIUM SECONDARY BATTERY AND LITHIUM SECONDARY BATTERY EACH UTILIZING THE POWDER**

(57)    The invention is to provide a material which, when used as a positive-electrode material for lithium secondary battery, brings about a reduction, in cost, an increase in safety, and an increase in load characteristics and further brings about an improvement in high-voltage characteristics and an improvement in powder handleability due to an improvement in bulk density. The invention relates to a lithium-transition metal compound powder for a positive-electrode material for lithium secondary battery, which comprises: secondary particles that are configured of primary particles having two or more compositions; and a lithium-transition metal compound having a function of being capable of insertion and release of lithium ions, wherein the powder gives a pore distribution curve having a peak at a pore radius of 80 nm or greater but less than 800 nm, and the secondary particles includes primary particles of a compound represented by a structural formula that includes at least one element selected from the group consisting of As, Ge, P, Pb, Sb, Si, and Sn, in which the primary particles of the compound are present at least in an inner part of the secondary particles.

Fig. 1

**Description**

Technical Field

The present invention relates to a positive-electrode active material for use in lithium secondary batteries, a process for producing the active material, a positive electrode for lithium secondary batteries which employs the positive-electrode active material, and a lithium secondary battery equipped with the positive electrode for lithium secondary batteries.

Background Art

Lithium secondary batteries are excellent in terms of energy density, output density, etc. and are effective for size and weight reduction. The demand for lithium secondary batteries as the electric power supplies of portable appliances, such as notebook type personal computers, portable telephones, and handy video cameras, is increasing rapidly. Lithium secondary batteries are attracting attention also as power supplies for electric vehicles or for leveling the load of electric power, etc., and the demand of the batteries as power supplies for hybrid electric vehicles is increasing rapidly in recent years. Especially in electric-vehicle applications, the batteries must be excellent in terms of low cost, safety, life (especially at high temperatures), and load characteristics, and improvements in materials are desired.

The materials which constitute a lithium secondary battery include a positive-electrode active material, and a substance which has the function of being capable of release and insertion of lithium ions is usable·as the active material. There are various positive-electrode active materials, which each have features. Common subjects for performance improvements include an improvement in load characteristics, and improvements in materials are strongly desired. Furthermore, there is a need for a material which is excellent also in terms of low cost, safety, and life (especially at high temperatures) and has a satisfactory balance among performances.

At present, a lithium-manganese composite oxide having a spinel structure, a lamellar lithium-nickel composite oxide, a lamellar lithium-cobalt composite oxide, and the like have been put to practical use as positive-electrode active materials for lithium secondary batteries. The lithium secondary batteries employing these lithium-containing composite oxides each have advantages and drawbacks concerning the properties. Namely, the lithium-manganese composite oxide having a spinel structure is inexpensive and relatively easy to synthesize and gives a battery having excellent safety, but has a low capacity and poor high-temperature characteristics (cycle characteristics and storability). The lamellar lithium-nickel composite oxide has a high capacity and excellent high-temperature characteristics, but has drawbacks, for example, that this composite oxide is difficult to synthesize and gives a battery which has poor safety and requires care when stored. The lamellar lithium-cobalt composite oxide is easy to synthesize and attains an excellent balance among battery performances, and batteries employing this composite oxide hence are being extensively used as power supplies for portable appliances. However, insufficient safety and high cost are major drawbacks of that lithium-cobalt composite oxide.

Under such current circumstances, a lithium-nickel-manganese-cobalt composite oxide having a lamellar structure has been proposed as a promising active material in which those drawbacks of positive-electrode active materials have been overcome or minimized and which attains an excellent balance among battery performances. In particular, in view of the recent circumstances in which a reduction in cost, an increase in voltage, and higher safety are required increasingly, the lithium-nickel-manganese-cobalt composite oxide is considered to be promising as a positive-electrode active material which can meet all these requirements.

However, since the degrees of cost reduction, voltage increase, and safety which are attained therewith vary depending on composition, it is necessary to select and use composite oxides within a limited composition range, for example, a composite oxide in which the manganese/nickel atomic ratio is approximately 1 or greater or which has a reduced cobalt content, for satisfying a further cost reduction, use at a higher set upper-limit voltage, and a request for higher safety. However, the lithium secondary battery in which a lithium-nickel-manganese-cobalt composite oxide having a composition within such a range is used as the positive-electrode material is reduced in load characteristics, such as rate/output characteristics, and in low-temperature output characteristics. Further improvements have hence been required for practical use.

Meanwhile, techniques in which a compound represented by a structural formula including at least one element selected from the group consisting of As, Ge, P, Pb, Sb, Si, and Sn is added to a positive-electrode active material powder for lithium secondary batteries and the mixture is treated have been known so far (see patent documents 1 to7).

Patent document 1 proposes a technique in which lithium phosphate is incorporated into a positive-electrode mix layer to inhibit internal resistance from increasing through storage and thereby improve durability. Patent document 2 discloses a technique in which lithium phosphate is added to starting materials for a lithium-transition metal composite oxide and the ingredients are mixed together in a dry process and then burned. Patent document 3 discloses a technique in which phosphorous acid is added to starting materials for a lithium-transition metal composite oxide and the ingredients are mixed together in a dry process and then burned in two stages. Patent document 4 discloses a technique in which diphosphorus pentoxide is added to starting materials for a lithium-transition metal composite oxide and the ingredients are mixed together in a dry process and then burned. Patent document 5 discloses a technique in which first primary particles having a lithium compound, e.g., lithium phosphate, that has been adhered to the surface thereof, second primary particles having a lithium compound, e.g., lithium phosphate, that has been adhered to the surface thereof, and pure water are wet-mixed together by means of a homogenizer and the mixture is spray-dried using a spray dryer. Patent document 6 describes a technique in which starting materials for a lithium-transition metal composite oxide are co-precipitated and the resultant precipitate is spray-dried and burned together with a phosphorus compound, thereby producing a lithium composite oxide in which an amorphous oxide containing phosphorus element that has concentrated therein is present at the crystal grain boundary. Patent document 7 describes a lithium-transition metal composite oxide which is obtained by mixing starting materials for the lithium-transition metal composite oxide together with a silicon compound and burning the mixture, and in which silicon oxide is present at the boundary of lithium composite oxide crystal grains which are primary particles.

Prior-Art Documents

Patent Documents

Patent Document 1: JP-A-2006-073482
Patent Document 2: JP-A-9-2319765
Patent Document 3: JP-A-2008-251434
Patent Document 4: JP-A-9-259863
Patent Document 5: JP-A-2007-48525
Patent Document 6: JP-A-2001-076724
Patent Document 7: JP-A-2009-076383

Summary of the Invention

Problems that the Invention is to Solve

The present inventors, under such circumstances, thought that for accomplishing the subject of improving load characteristics, such as rate/output characteristics, it was important to obtain active-material particles in which the secondary particles were porous, while keeping the material sufficiently crystalline in the stage of burning for active-material production. The inventors diligently made investigations. As a result, the inventors found that a desired lithium-transition metal compound powder, in particular, a lamellar lithium-nickel-manganese-cobalt composite oxide, is obtained by a production process which includes simultaneously pulverizing major starting material ingredients in a liquid medium to obtain a slurry in which these ingredients have been evenly dispersed and spray-drying and burning the slurry. This powder was usable as a positive-electrode material for lithium secondary batteries which was capable of attaining not only a reduction in cost, an increase in high-voltage resistance, and an increase in safety but also an improvement in load characteristics such as rate/output characteristics. However, this positive-electrode material has undergone property changes such as a decrease in bulk density and an increase in specific surface area and, hence, has newly encountered problems that it is difficult to handle the positive-electrode material as a powder and electrode preparation is difficult. In addition, this powder has posed a problem concerning an improvement in cycle retention during use at a high voltage.

The techniques disclosed in patent documents 1 to 7 have had the following problems. In patent document 1, no attention is directed to the function of the compound, i.e., the function of accelerating particle growth and sintering during burning, and burning is not conducted after the addition. The production process according to patent document 2 is intended to form a solid solution of phosphorus in the crystal lattice of a lithium-transition metal composite oxide, and is not a process for forming particles containing the element of phosphorus therein, as in the present invention. The production process according to patent document 3 is intended to cause a phosphorus compound to be present in the vicinity of the surface of particles of a lithium-transition metal composite oxide, and is not a process for forming particles containing the element of phosphorus therein, as in the present invention. The production process according to patent document 4 is intended to coat the surface of particles of a lithium-transition metal composite oxide with phosphorus, and is not a process for forming particles containing the element of phosphorus therein, as in the present invention. The production process according to patent document 5 is intended to use primary particles which have a phosphorus compound adhered to the surface thereof, and is not a process for forming particles containing the element of phosphorus therein, as in the present invention. The positive-electrode active material according to patent document 6 is thought to be reduced in battery characteristics such as thermal stability, because this positive-electrode active material was produced through burning conducted at a low temperature and has a high Ni content. The positive-electrode active material according to patent document 7 is thought to be reduced in battery characteristics such as thermal stability, because this positive-electrode active material was produced through burning conducted at a low temperature and has a high Ni content. In addition, as will be shown as Comparative Examples herein, the positive-electrode active material according to patent document 7 has no specific pores and does not produce the effects of the invention.

An object of the invention is to provide a positive-electrode active material for lithium secondary batteries which has small interstices among the active-material particles, has a high bulk density, is capable of attaining a reduction in cost, an increase in safety, and an increase in load characteristics when used as the positive-electrode material of lithium secondary batteries, and is further capable of attaining an improvement in powder handleability due to the improved bulk density, and which therefore makes it possible to obtain a lithium secondary battery that is inexpensive and has excellent handleability, high safety, and excellent performances.

Another object is to provide a positive-electrode active material for lithium secondary batteries which is effective in improving cycle capacity retention during high-voltage use and which brings about excellent life characteristics.

Means for Solving the Problems

The present inventors diligently made investigations in order to attain an improvement in bulk density and optimization of specific surface area. As a result, the inventors have found that a lithium-transition metal composite oxide for lithium secondary batteries which has been obtained by adding a compound represented by a structural formula that includes at least one element selected from the group consisting of As, Ge, P, Pb, Sb, Si, and Sn (hereinafter referred to as "additive element 1 of the invention") (that compound being hereinafter referred to as "additive 1 of the invention") and then burning the mixture can be a lithium-containing transition metal compound powder which is easy to handle and easy to use in electrode preparation while retaining the intact effects of improvement described above, when the composite oxide has specific pores.

Namely, the lithium-transition metal compound powders for a positive-electrode material for lithium secondary battery of the invention have the following features.

(1) A lithium-transition metal compound powder for a positive-electrode material for lithium secondary battery, which comprises: secondary particles that are configured of primary particles having two or more compositions; and a lithium-transition metal compound having a function of being capable of insertion and release of lithium ions, wherein the powder gives a pore distribution curve having a peak at a pore radius of 80 nm or greater but less than 800 nm, and the secondary particles includes primary particles of a compound (hereinafter referred to as "additive 1 of the invention") represented by a structural formula that includes at least one element (hereinafter referred to as "additive element 1 of the invention") selected from the group consisting of As, Ge, P, Pb, Sb, Si, and Sn, in which the primary particles of the compound are present at least in an inner part of the secondary particles.

(2) A lithium-transition metal compound powder for a positive-electrode material for lithium secondary battery, which comprises: secondary particles that are configured of primary particles; and a lithium-transition metal compound having a function of being capable of insertion and release of lithium ions, wherein the powder is obtained by adding a compound (hereinafter referred to as "additive 1 of the invention") represented by a structural formula that includes at least one element (hereinafter referred to as "additive element 1 of the invention") selected from the group consisting of As, Ge, P, Pb, Sb, Si and Sn, and a compound (hereinafter referred to as "other additive 1 of the invention") containing at least one element (hereinafter referred to as "other additive element 1 of the invention") selected from Mo, W, Nb, Ta and Re to a starting material for the lithium-transition metal compound, and then burning the mixture.

(3) A lithium-transition metal compound powder for a positive-electrode material for lithium secondary battery, which comprises: secondary particles that are configured of primary particles; and a lithium-transition metal compound having a function of being capable of insertion and release of lithium ions, wherein the powder is obtained by adding a compound (hereinafter referred to as "additive 1 of the invention") represented by a structural formula that includes at least one element (hereinafter referred to as "additive element 1 of the invention") selected from the group consisting of As, Ge, P, Pb, Sb, Si and Sn to a starting material for the lithium-transition metal compound in an amount of 0.05-5% by mole based on the total amount of the starting material, and then burning the mixture at 950°C or higher,

(4) The lithium-transition metal compound powder for a positive-electrode material for lithium secondary battery according to any one of the items (1) to (3), which, when examined by X-ray powder diffractometry using a CuKα ray, satisfies the relationship $0.01 \leq FWHM \leq 0.5$, wherein the FWHM is a half-value width of a diffraction peak present at a diffraction angle 2θ of about 64.5°.

(5) The lithium-transition metal compound powder for a positive-electrode material for lithium secondary battery according to any one of the items (1) to (4), wherein the atomic ratio of the sum of the at least one element selected from the group consisting of As, Ge, P, Pb, Sb, Si and Sn to the sum of lithium and the metallic elements other than the at least one element selected from the group consisting of As, Ge, P, Pb, Sb, Si, and Sn in structural formula in a surface part of the primary particles is 1-200 times the atomic ratio for the whole particles.

(6) The lithium-transition metal compound powder for a positive-electrode material for lithium secondary battery according to any one of the items (1) to (5), which further comprises a compound having at least one element selected from Mo, W, Nb, Ta, and Re.

(7) The lithium-transition metal compound powder for a positive-electrode material for lithium secondary battery according to any one of the items (1) to (6), which further comprises a compound containing at least one of element B and element Bi.

(8) The powder for a positive-electrode material for lithium secondary battery according to any one of the items (1) to (7), wherein the lithium-transition metal compound is a lithium-nickel-manganese-cobalt composite oxide having a lamellar structure or a lithium-manganese composite oxide having a spinel structure.

(9) The lithium-transition metal compound powder for a positive-electrode material for lithium secondary battery according to the item (8), wherein the lithium-nickel-manganese-cobalt composite oxide has a composition represented by the following composition formula (A) or (B).

$$Li_{1+x}MO_2 \qquad\qquad (A)$$

(In formula (A), x is 0 to 0.5, and M is elements configured of Li, Ni, and Mn or of Li, Ni, Mn, and Co; the Mn/Ni molar ratio is 0.1-5; the Co/(Mn+Ni+Co) molar ratio is 0-0.35; and the molar ratio of Li in M is 0.001-0.2.)

$$Li[Li_a M_b Mn_{2-b-a}]O_{4+\delta} \qquad\qquad (B)$$

(In formula (B), a, b, and $\delta$ satisfy $0 \leq a \leq 0.3$, $0.4 < b < b.6$, and $-0.5 < 8 < 0.5$, and M represents at least one transition metal selected from Ni, Cr, Fe, Co, Cu, Zr, Al, and Mg.)

(10) A process for producing a lithium-transition metal compound powder for a positive-electrode material for lithium secondary battery, the process comprising: a step in which a lithium compound, a compound of at least one transition metal selected from V, Cr, Mn, Fe, Co, Ni and Cu, and a compound (hereinafter referred to as "additive 1 of the invention") represented by a structural formula that includes at least one element (hereinafter referred to as "additive element 1 of the invention") selected from the group consisting of As, Ge, P, Pb, Sb, Si and Sn, are pulverized in a liquid medium to prepare a slurry which contains these compounds evenly dispersed therein; a spray drying step in which the slurry is spray-dried; and a burning step in which the resultant spray-dried powder is burned at 950°C or higher in an oxygen-containing gas atmosphere.

(11) The process for producing a lithium-transition metal compound powder for a positive-electrode material for lithium secondary battery according to the item (10), wherein in the slurry preparation step, the lithium compound, the transition metal compound, and the compound represented by a structural formula that includes at least one element selected from the group consisting of As, Ge, P, Pb, Sb, Si and Sn, are pulverized in the liquid medium until the particles come to have a median diameter, as measured under the following conditions, of 0.7 $\mu$m or less, and in the spray drying step, the spray drying is conducted under the conditions of 50 cP$\leq$V$\leq$10,000 cP and 500$\leq$G/S$\leq$10,000, wherein V (cP) is a viscosity of the slurry which is being subjected to the spray drying, S (L/min) is an amount of slurry feeding, and G (L/min) is an amount of gas feeding.

(Median diameter measurement conditions are as follows:

i) an ultrasonic dispersion treatment is conducted at an output of 30 W and a frequency if 22.5 kHz for 5 minutes and thereafter

ii) a median diameter of the particles are measured by means of a laser diffraction/scattering type particle size distribution analyzer while setting the refractive index at 1.24, the particle diameter being determined on a volume basis.)

(12) A positive electrode for lithium secondary battery, which comprises a positive-electrode active material layer and a current collector, the positive-electrode active material layer comprising a binder and either the powder for a positive-electrode material for lithium secondary battery according to any one of the items (1) to (9), or a lithium-transition metal compound powder for a positive-electrode material for lithium secondary battery which has been produced by the production process according to the items (10) and (11).

(13) A lithium secondary battery comprising: a negative electrode that is capable of occluding and releasing lithium; a nonaqueous electrolyte that contains a lithium salt; and a positive electrode that is capable of occluding and releasing lithium, wherein the positive electrode is the positive electrode for lithium secondary battery according to the item (12).

(14) The lithium secondary battery according to the item (13), which has been designed so that the positive electrode in a fully charged state has a charging potential of 4.4 V (vs. Li/Li$^+$) or higher.

Effects of the Invention

The positive-electrode active materials for lithium secondary batteries of the invention, when used as positive-electrode materials for lithium secondary batteries, can attain a reduction in cost, an increase in safety, and an increase is load characteristics and can further attain an improvement in high-voltage characteristics and an improvement in powder handleability due to an improvement in bulk density. Consequently, a lithium secondary battery which is inexpensive, has excellent handleability, is highly safe, and has excellent performances is provided according to the invention.

Brief Description of the Drawings

[Fig. 1] Fig. 1 is a graph which shows a pore distribution curve of the lithium-nickel-manganese-cobalt composite oxide produced in Example 1.
[Fig. 2] Fig. 2 is a graph which shows a pore distribution curve of the lithium-nickel-manganese-cobalt composite oxide produced in Example 2.
[Fig. 3] Fig. 3 is a graph which shows a pore distribution curve of the lithium-nickel-manganese-cobalt composite oxide produced in Example 3.
[Fig. 4] Fig. 4 is a graph which shows a pore distribution curve of the lithium-nickel-manganese-cobalt composite oxide produced in Comparative Example 1.
[Fig. 5] Fig. 5 is a graph which shows a pore distribution curve of the lithium-nickel-manganese-cobalt composite oxide produced in Comparative Example 2.
[Fig. 6] Fig. 6 is a graph which shows a pore distribution curve of the lithium-nickel-manganese-cabalt composite oxide produced in Comparative Example 3.
[Fig. 7] Fig. 7 is a graph which shows a pore distribution curve of the lithium-nickel-manganese-cobalt composite oxide produced in Comparative Example 4.
[Fig. 8] Fig. 8 is an SEM image (photograph) (magnification, ×10,000) of the lithium-nickel-manganese-cobalt composite oxide produced in Example 1.
[Fig, 9] Fig. 9 is an SEM-EDX image (photograph) (magnification, ×10,000) of a section of the lithium-nickel-manganese-cobalt composite oxide produced in Example 1.
[Fig. 10] Fig. 10 is an SEM image (photograph) (magnification, ×10,000) of the lithium-nickel-manganese-cobalt composite oxide produced in Example 2.
[Fig. 11] Fig. 11 is an SEM-EDX image (photograph) (magnification, ×10,000) of a section of the lithium-nickel-manganese-cobalt composite oxide produced in Example 2.
[Fig. 12] Fig. 12 is an SEM image (photograph) (magnification, ×10,000) of the lithium-nickel-manganese-cobalt composite oxide produced in Example 3.
[Fig. 13] Fig. 13 is an SEM-EDX image (photograph) (magnification, ×10,000) of a section of the lithium-nickel-manganese-cobalt composite oxide produced in Example 3.
[Fig. 14] Fig. 14 is an SEM image (photograph) (magnification, ×10,000) of the lithium-nickel-manganese-cobalt composite oxide produced in Comparative Example 1.
[Fig. 15] Fig. 15 is an SEM image (photograph) (magnification, ×10,000) of the lithium-nickel-manganese-cobalt composite oxide produced in Comparative Example 2.
[Fig. 16] Fig. 16 is an SEM image (photograph) (magnification, ×10,000) of the lithium-nickel-manganese-cobalt composite oxide produced in Comparative Example 3.
[Fig. 17] Fig. 17 is an SEM image (photograph) (magnification, ×10,000) of the lithium-nickel-manganese-cobalt composite oxide produced in Comparative Example 4.
[Fig. 18] Fig. 18 is an X-ray powder diffraction peak of the lithium-nickel-manganese-cobalt composite oxide powder produced in Example 1.
[Fig. 19] Fig. 19 is an X-ray powder diffraction peak of the lithium-nickel-manganese-cobalt composite oxide powder produced in Example 2.
[Fig. 20] Fig. 20 is an X-ray powder diffraction peak of the lithium-nickel-manganese-cobalt composite oxide powder produced in Example 3.

[Fig. 21] Fig. 21 is an X-ray powder diffraction peak of the lithium-nickel-manganese-cobalt composite oxide powder produced in Comparative Example 1.

[Fig. 22] Fig. 22 is an X-ray powder diffraction peak of the lithium-nickel-manganese-cobalt composite oxide powder produced in Comparative Example 2.

[Fig. 23] Fig. 23 is an X-ray powder diffraction peak of the lithium-nickel-manganese-cobalt composite oxide powder produced in Comparative Example 3.

[Fig. 24] Fig. 24 is an X-ray powder diffraction peak of the lithium-nickel-manganese-cobalt composite oxide powder produced in Comparative Example 4.

Modes for Carrying Out the Invention

Modes for carrying out the invention will be explained below in detail. The following explanations on constituent elements of the invention are for embodiments (representative embodiments) of the invention, and the invention should not be construed as being limited to the embodiments unless the invention departs from the spirit thereof.

[Lithium-Transition Metal Compound Powders]

The positive-electrode active materials of the invention are the following (1) to (3).

(1) A lithium-transition metal compound powder for a positive-electrode material for lithium secondary battery, which comprises secondary particles that are configured of primary particles having two or more compositions and include, as a main component, a lithium-transition metal compound having the function of being capable of insertion and release of lithium ions, the powder giving a pore distribution curve which has a peak at a pore radius of 80 nm or greater but less than 800 nm, the secondary particles including primary particles of a compound (hereinafter referred to as "additive 1 of the invention") represented by a structural formula that includes at least one element (hereinafter referred to as "additive element 1 of the invention") selected from the group consisting of As, Ge, P, Pb, Sb, Si, and Sn, the primary particles of the compound being present at least in an inner part of the secondary particles.

(2) A lithium-transition metal compound powder for a positive-electrode material for lithium secondary battery, which comprises, as a main component, a lithium-transition metal compound having the function of being capable of insertion and release of lithium ions, the powder being obtained by adding a compound (hereinafter referred to as "additive 1 of the invention") represented by a structural formula which includes at least one element (hereinafter referred to as "additive element 1 of the invention") selected from the group consisting of As, Ge, P, Pb, Sb, Si, and Sn and a compound (hereinafter referred to as "other additive 1") having at least one element (hereinafter referred to as "other additive element 1") selected from Mo, W, Nb, Ta, and Re to starting materials for the main component and burning the mixture.

(3) A lithium-transition metal compound powder for a positive-electrode material for lithium secondary battery, which comprises, as a main component, a lithium-transition metal compound having the function of being capable of insertion and release of lithium ions, the powder being obtained by adding a compound (hereinafter referred to as "additive 1 of the invention") represented by a structural formula which includes at least one element (hereinafter referred to as "additive element 1 of the invention") selected from the group consisting of As, Ge, P, Pb, Sb, Si, and Sn to starting materials for the main component in an amount of 0.05-5% by mole based on the total amount of the starting materials for the main component, and then burning the mixture at 950°C or higher.

<Lithium-containing Transition Metal Compound>

The lithium-transition metal compound according to the invention is a compound which has a structure capable of release and insertion of Li ions. Examples thereof include sulfides, phosphoric acid salt compounds, and lithium-transition metal composite oxides. Examples of the sulfides include compounds having a two-dimensional lamellar structure, such as $TiS_2$ and $MoS_2$, and Chevrel compounds which have a rigid three-dimensional framework structure and are represented by the general formula $Me_xMo_6S_8$ (Me is various transition metals including Pb, Ag, and Cu). Examples of the phosphoric acid salt compounds include ones which belong to an olivine structure, which generally are represented by $LiMePO_4$ (Me is at least one transition metal). Specific examples thereof include $LiFePO_4$, $LiCoPO_4$, $LiNiPO_4$, and $LiMnPO_4$. Examples of the lithium-transition metal composite oxides include ones which belong to a spinel structure capable of three-dimensional diffusion or to a lamellar structure which enables lithium ions to diffuse two-dimensionally. The composite oxides having a spinel structure are generally represented by $LiMe_2O_4$ (Me is at least one transition metal), and examples thereof include $LiMn_2O_4$, $LiCoMnO_4$, $LiNi_{0.5}Mn_{1.5}O_4$, and $LiCoVO_4$. The composite oxides having a lamellar structure are generally represented by $LiMeO_2$ (Me is at least one transition metal), and examples

thereof include $LiCoO_2$, $LiNiO_2$, $LiNi_{1-x}Co_xO_2$, $LiNi_{1-y}Co_xMn_yO_2$, $LiNi_{0.5}Mn_{0.5}O_2$, $Li_{1.2}Cr_{0.4}Mn_{0.4}O_2$, $Li_{1.2}Cr_{0.4}Ti_{0.4}O_2$, and $LiMnO_2$.

It is preferred that the lithium-transition metal compound powders of the invention should have an olivine structure, a spinel structure, or a lamellar structure, from the standpoint of diffusion of lithium ions. Preferred of these are the powders having a lamellar structure or a spinel structure because the crystal lattice thereof undergoes sufficient expansion and contraction with charge/discharge to enable the effects of the invention to be produced remarkably. Especially preferred of these are the powders having a lamellar structure.

Other elements may be introduced into the lithium-transition metal compound powders of the invention. The other elements are selected from one or more of B, Na, Mg, Al, K, Ca, Ti, V, Cr, Fe, Cu, Zn, Sr, Y, Zr, Nb, Ru, Rh, Pd, Ag, In, Sb, Te, Ba, Ta, Mo, W, Re, Os, Ir, Pt, Au, Pb, La, Ce, Pr, Nd, Sm, Eu, Gd, Tb, Dy, Ho, Er, Tm, Yb, Lu, Bi, N, F, S, Cl, Br, and I. These other elements may have been incorporated into the crystal structure of the lithium-transition metal compound, or may have localized as the elements or compounds on the surface of the lithium-transition metal compound particles or in the crystal boundary, etc., without being incorporated into the crystal structure of the compound.

In the invention, although the at least one element selected from the group consisting of As, Ge, P, Pb, Sb, Si, and Sn is mostly present as particles in the secondary particles as stated above, some of the at least one element may have replaced some of the transition metal layer. In the case where at least one element selected from the group consisting of As, Ge, P, Pb, Sb, Si, and Sn has replaced some of the transition metal layer, this lithium-transition metal compound includes the compound in which some of the basic framework of the lithium-transition metal has been replaced, even when the basic framework is described in terms of general formula (1), which will be given later.

<At least One Element selected from As, Ge, P, Pb, Sb, Si, and Sn>

The invention is characterized in that primary particles of a compound (hereinafter referred to as "additive 1 of the invention") having at least one element (hereinafter referred to as "additive element 1 of the invention") selected from the group consisting of As, Ge, P, Pb, Sb, Si, and Sn are present at least in an inner part of the secondary particles. Examples of methods therefor include a method in which at least one compound having at least one element selected from the group consisting of As, Ge, P, Pb, Sb, Si, and Sn is added to starting materials for the main component, i.e., the lithium-transition metal compound, in an amount of 0.05-5% by mole based on the total amount of the starting materials for the main component and the resultant mixture is burned.

In the invention, the compound having the element serves to accelerate the growth of active-material particles, for example, by accelerating the sintering of the primary particles or secondary particles of the positive-electrode active material during the high-temperature burning. The compound hence has the effect of giving high-density powder properties while attaining an increase in crystallinity.

For example, when a lithium-transition metal compound powder having a composition within the range specified by the composition formula (A) or (B) described later, which is suitable for the invention, is to be produced by a production process which includes simultaneously pulverizing starting materials for the main component in a liquid medium to prepare a slurry containing the starting materials evenly dispersed therein, spray-drying the slurry, and burning the powder, so as to form a configuration in which the secondary particles have large interstices therein and a high void content, then this results in a decrease in bulk density and an increase in specific surface area, making the secondary particles difficult to handle as a powder and difficult to use in electrode preparation. Namely, it is extremely difficult to simultaneously improve these two properties. However, it is possible to overcome this trade-off relationship, for example, by adding a compound (hereinafter referred to as "additive 1 of the invention") having at least one element (hereinafter referred to as "additive element 1 of the invention") selected from the group consisting of As, Ge, P, Pb, Sb, Si, and Sn and burning the mixture.

Examples of the "additive 1 of the invention" include compounds having at least one element selected from the group consisting of As, Ge, P, Pb, Sb, Si, and Sn. These elements are apt to have an oxidation number of 4 or 5. In lithium-transition metal composite oxides such as $LiMO_2$ having a lamellar structure and $LiMnO_4$ having a spinel structure, the transition metal layer has an average oxidation number of 3. Because of this, those elements having a valence of 4 or 5 are less apt to form a solid solution in the transition metal layer. Those elements hence serve as a sintering aid during burning to produce the effect of accelerating particle growth and sintering. However, those elements form primary particles without forming a solid solution in the lithium-transition metal composite oxide within the secondary particles. Consequently, those elements each are presumed to produce the effect of the invention described above. Preferred of those elements are As, P, Pb, and Si. These preferred elements have an ionic radius which differs by at least 15% from the ionic radius of the transition metals used in the active material. These elements hence are less apt to replace some of the transition metal layer. Furthermore, As, P, and Si, among these elements, are more preferred because these elements have an ionic radius which is smaller by at least 15% than the ionic radius of the transition metals used in the active material, and are hence even less apt to replace some of the transition metal layer. P and Si are especially preferred because these elements are available at low cost as industrial raw materials and are light elements, and P is most preferred.

The mechanism by which the specific compound added as "additive 1 of the invention" produces the effect of accelerating particle growth and sintering during burning in the invention has not been elucidated. However, the following is presumed. For example, in view of the fact that a compound represented by a structural formula which includes element P produces the effect as will be demonstrated by an Example, the phosphorus is considered to localize on the surface of the lithium-transition metal compound particles or at the grain boundary thereof because phosphorus differs from each of the cationic elements constituting the lithium-transition metal compound and because phosphorus rarely forms a solid solution through a solid-phase reaction. Consequently, the phosphorus functions to lower the surface energy of the positive-electrode active material particles to accelerate the growth and sintering of the particles. The crystallinity of the compound having at least one element selected from the group consisting of As, Ge, P, Pb, Sb, Si, and Sn is not particularly limited. It is, however, desirable that the compound should have high crystallinity, when the performances of the battery employing the lithium-transition metal composite oxide and other properties of the oxide are taken into account

The kind of the compound (additive 1 of the invention) having at least one element (additive element I of the invention) selected from the group consisting of As, Ge, P, Pb, Sb, Si, and Sn is not particularly limited so long as the compound produces the effect of the invention. Examples thereof include inorganic compounds and organometallic compounds of those elements, Usually, however, inorganic compounds are used. Preferred of these additives 1 of the invention, from the standpoint of being available at low cost as industrial raw materials, are phosphoric acid, lithium phosphate, ammonium dihydrogen phosphate, diammonium hydrogen phosphate, polyphosphoric acid, silicic acid salts, silicic acid dioxide, lithium silicates such as $Li_2SiO_3$ and $LiSiO_4$, $As_2O_3$, $As_2O_5$, $As_2S_3$, $AsCl_3$, $AsI_3$, $GeO$, $GeO_2$, $Cre_2Cl_6$, $GeS$, $GeS_2$, $Ge(CH_3)_4$, $Ge(C_2H_5)_4$, $PbO$, $PbL_2$, $Pb_2O_3$, $Pb_3O_4$, $Sb_2S_3$, $Sb_2O_4$, $Sb_4O_{10}$, $Sb(OH)_3$, $(SbO)_2SO_4$, $SbF_3$, $SbCl_3$, $SbI_3$, $SnCl_2$, $SnCl_4$, $SnF_2$, $SnF_4$, $SnI_2$, $SnI_4$, $SnO$, $SnO_2$, $Sn(OH)_2$, $SnS$, $SnS_2$, and $SnS_4$. Preferred of these are phosphoric acid, lithium phosphate, ammonium dihydrogen phosphate, diammonium hydrogen phosphate, polyphosphoric acid, silicic acid salts, silicic acid dioxide, lithium silicates such as $Li_2SiO_3$ and $LiSiO_4$, $As_2O_3$, $As_2O_5$, $GeO$, $GeO_2$, $Ge(CH_3)_4$, $Ge(C_2H_5)_4$, $PbO$, $PbO_2$, $Pb_2O_3$, $Pb_3O_4$, $Sb_2O_4$, $Sb_4O_{10}$, $Sb(OH)_3$, $(SbO)_2SO_4$, $SnO$, $SnO_2$, and $Sn(OH)_2$. More preferred are phosphoric acid, lithium phosphate, ammonium dihydrogen phosphate, diammonium hydrogen phosphate, polyphosphoric acid, silicic acid salts, silicic acid dioxide, and lithium silicates such as $Li_2SiO_3$ and $LiSiO_4$. Especially preferred are phosphoric acid, lithium phosphate, polyphosphoric acid, and lithium silicates. Most preferred are lithium phosphate, polyphosphoric acid, and lithium silicates.

With respect to the range of the amount of the additive 1 of the invention to be added, the amount thereof based on the total weight of the starting materials for constituting the main component is generally 0.05% by mole or more, preferably 0.1% by mole, more preferably 0.3% by mole or more, even more preferably 0.5% by mole or more, especially preferably 1% by mole or more, and is generally 5% by mole or less, preferably 4% by mole or less, more preferably 3% by mole or less, especially preferably 2% by mole or less. In case where the amount thereof is less than the lower limit, there is a possibility that the effect might not be obtained. In case where the amount thereof exceeds the upper limit, there is the possibility of resulting in a decrease in battery performance.

<X-ray Powder Diffraction Peak>

In the invention, it is preferred that the lithium-transition metal compound powder having a composition which satisfies composition formulae (A) and (A') that will be given later should give, through an examination by X-ray powder diffractometry using a CuK$\alpha$ ray, a pattern in which a diffraction peak present at a diffraction angle 2$\theta$ of about 64.5° has a half-value width FWHM in the range of 0.01≤FWHM≤0.5.

In general, the half-value width of an X-ray diffraction peak is used as a measure of crystallinity. In view of a correlation between crystallinity and battery performance, a powder in which the diffraction peak present at a diffraction angle 2$\theta$ of about 64.5° has a half-value width that is within the specific range is considered to bring about satisfactory battery performances.

In the invention, the FWHM is generally 0.01 or more, preferably 0.015 or more, more preferably 0.02 or more, even more preferably 0.025 or more, most preferably 0.03 or more, and is 0.5 or less, preferably 0.2 or less, more preferably 0.17 or less, most preferably 0.15 or less.

In the invention, in the case where a lithium-nickel-manganese-cobalt composite oxide powder having a composition satisfying composition formulae (A) and (A') which will be given later has a lamellar structure, it is preferred that this powder, when examined by X-ray powder diffractometry using a CuK$\alpha$ ray, should show a (018) diffraction peak at a diffraction angle 2$\theta$ of about 64°, a (110) diffraction peak at a 2$\theta$ of about 64.5°, and a (113) diffraction peak at a 2$\theta$ of about 68°, wherein each of these peaks has, on the larger-angle side of the peak top, no diffraction peak assigned to a different phase or has, on the larger-angle side of the peak top, a diffraction peak assigned to a different phase provided that the ratio of the integrated intensity of the different-phase peak to the integrated intensity of the diffraction peak assigned to the original crystal phase should be in the following range.

$$0 \leq I_{018}*/I_{018} \leq 0.20$$

$$0 \leq I_{110}*/I_{110} \leq 0.25$$

$$0 \leq I_{113}*/I_{113} \leq 0.50$$

(In the relationships given above, $I_{018}$, $I_{110}$, and $I_{113}$ represent the integrated intensities of the (018), (110), and (113) diffraction peaks, respectively, and $I_{018}*$. $I_{110}*$, and $I_{113}*$ represent the integrated intensities of the diffraction peaks assigned to a different phase and appearing on the larger-angle side of the peak tops of the (018), (110), and (113) diffraction peaks, respectively.)

Incidentally, substances which are causative of such diffraction peaks assigned to a different phase have not been elucidated in detail. However, when a different phase is contained, this powder gives a battery reduced in capacity, rate characteristics, cycle characteristics, etc. Consequently, although the diffraction peaks each may have such a diffraction peak to such a degree that this does not adversely affect the performances of the battery of the invention, it is preferred that the proportion thereof should be within the range shown above. In the case where the composite oxide has a lamellar structure, the ratios of the integrated intensities of the diffraction peaks assigned to a different phase to the integrated intensities of the corresponding diffraction peaks are generally $I_{018}*/I_{018} \leq 0.20$, $I_{110}*/I_{110} \leq 0.25$, and $I_{113}*/I_{113} \leq 0.50$, preferably $I_{018}*/I_{018} \leq 0.18$, $I_{100}*/I_{110} \leq 0.20$, and $I_{113}*/I_{113} \leq 0.45$, more preferably $I_{018}*/I_{018} \leq 0.16$, $I_{100}*/I_{110} \leq 0.15$, and $I_{113}*/I_{113} \leq 0.40$, even more preferably $I_{018}*/I_{018} \leq 0.14$, $I_{110}*/I_{110} \leq 0.13$, and $I_{113}*/I_{113} \leq 0.38$. In particular, it is most preferred that there should be no diffraction peak assigned to a different phase.

<Crystalline Compound having at least one Element selected from Group consisting of As, Ge, P, Pb, Sb, Si, and Sn>

The lithium-transition metal compound powders of the invention each are a powder which is composed of secondary particles configured of primary particles having two or more compositions, and it is preferred that a crystalline compound having at least one element selected from the group consisting of As, Ge, P, Pb, Sb, Si, and Sn should be present at least in an inner part of the secondary particles.

That primary particles of a crystalline compound having at least one element selected from the group consisting of As, Ge, P, Pb, Sb, Si, and Sn are present at least in an inner part of the secondary particles can be ascertained, for example, by forming a cross-section of any of the secondary particles with a cross-section polisher or the like, examining the cross-section with an SEM or a TEM, and further analyzing the results with an EDX (energy dispersive X-ray analyzer),

With respect to ascertainment of crystallinity, whether the compound is crystalline or not can be determined by examining the same particle as that particle with an XRD or TEM. Specifically, in the case of an XRD, when a peak assigned to the crystalline compound having at least one element selected from the group consisting of As, Ge, P, Pb, Sb, Si, and Sn, which corresponds, for example, to $Li_3PO_4$, $P_2O_5$, $P_2O_3$, $LiPO_3$, $Li_4P_2O_7$, $SiO_2$, $Li_2SiO_3$, $Li_4SiO_4$, $Li_2Si_2O_5$, $GeO_2$, $L_4Ge_5O_{12}$, $Li_4GeO_4$, $Ga_2O_3$, $LiGaO_2$, $LiGa_5O_8$, $Li_5GaO_4$, or the like, can be observed, then the compound can be regarded as crystalline. In the case where the concentration of the at least one element selected from the group consisting of As, Ge, P, Pb, Sb, Si, and Sn is too low to be detected with an XRD, this compound can be considered to be crystalline when a spot derived from a crystalline compound can be observed in an examination with a TEM.

<Degree of Concentration of at least one Element selected from Group consisting of As, Ge, P, Pb, Sb, Si, and Sn in Surface>

It is more preferred that in each of the lithium-transition metal compound powders of the invention, the at least one element derived from additive 1 of the invention, i.e., at least one element selected from the group consisting of As, Ge, P, Pb, Sb, Si, and Sn (additive element 1 of the invention), should be present in a concentrated state in a surface part of the primary particles of the powder. Specifically, the molar ratio of the sum of the additive elements to the sum of Li and the metallic elements other than the additive elements (i.e., Li and the metallic elements other than the additive elements) in the surface part of the primary particles is usually preferably at least one time the atomic ratio for the whole particles. The lower limit of this proportion is preferably 1.05 times or more, more preferably 1.1 time or more, especially preferably 2 times or more. The upper limit thereof usually is not particularly limited. However, the proportion thereof is preferably 200 times or less, more preferably 100 times or less, especially preferably 30 times or less, most preferably 15 times or less. Too small values of the proportion may result in cases where the effect of improving powder properties is lessened. Conversely, too large values thereof may result in impaired battery performances.

The composition of the surface part of the primary particles of a lithium-transition metal compound powder may be analyzed by X-ray photoelectron spectroscopy (XPS) using monochromatic AlK$\alpha$ as an X-ray source under the conditions of an analysis area of 0.8 mm in terms of diameter and a pickup angle of 45°. The range (depth) in which the analysis is possible is generally from 0.1 nm to 50 nm although the range varies depending on the composition of the primary particles. Especially in the case of a positive-electrode active material, that range is generally from 1 nm to 10 nm. Consequently, in the invention, the term "surface part of the primary particles of a lithium-transition metal compound powder" means the range in which analysis is possible under those conditions.

<Other Additive Element>

It is preferred in the invention that a compound (hereinafter referred to as "other additive 1") having at least one element (hereinafter referred to as "other additive element 1") selected from Mo, W, Nb, Ta, and Re should be used besides the compound (additive 1 of the invention) having at least one element selected from the group consisting of As, Ge, P, Pb, Sb, Si, and Sn. From the standpoint of producing a high effect, Mo or W is preferred of these other additive elements 1, and W is the most preferred.

The kind of the compound (other additive 1) which contains other additive element 1 is not particularly limited so long as the effect of the invention is produced with this compound. Usually, however, oxides are used. Examples of other additive 1 include compounds such as $MoO$, $MoO_2$, $MoO_3$, $MoO_x$, $Mo_2O_3$, $Mo_2O_5$, $Li_2MoO_4$, $WO$, $WO_2$, $WO_3$, $WO_x$, $W_2O_3$, $W_2O_5$, $W_{18}O_{49}$, $W_{20}O_{58}$, $W_{24}O_{70}$, $W_{25}O_{73}$, $W_{40}O_{118}$, $Li_2WO_4$, $NbO$, $NbO_2$, $Nb_2O_3$, $Nb_2O_5$, $Nb_2O_5 \cdot nH_2O$, $LiNbO_3$, $Ta_2O$, $Ta_2O_5$, $LiTaO_3$, $ReO_2$, $ReO_3$, $Re_2O_3$, and $Re_2O_7$. From the standpoint of being relatively easily available as industrial raw materials or of including lithium, preferred examples thereof include $MoO_3$, $Li_2MoO_4$, $WO_3$, and $Li_2WO_4$, and especially preferred, examples thereof include $WO_3$. One of these other additives 1 may be used alone, or a mixture of two or more thereof may be used.

It is preferred in the invention that a compound (other additive 2) having at least one element (other additive element 2) selected from B and Bi should be used besides the compound (additive 1 of the invention) having at least one element selected from the group consisting of As, Ge, P, Pb, Sb, Si, and Sn. Preferred of these other additive elements 2 is B, because B is available at low cost as an industrial raw material and is a light element.

The kind of the compound (other additive 2) which contains additive element 2 is not particularly limited so long as the effect of the invention is produced with this compound. Usually, however, use is made of boric acid, salts of oxoacids, oxides, hydroxides, or the like. From the standpoint of being available at low cost as an industrial raw material, boric acid and oxides are preferred of these other additives 2, and boric acid is especially preferred.

Examples of other additive 2 include compounds such as $BO$, $B_2O_2$, $B_2O_3$, $B_4O_5$, $B_6O$, $B_7O$, $B_{13}O_2$, $LiBO_2$, $LiB_5O_8$, $Li_2B_4O_7$, $HBO_2$, $H_3BO_3$, $B(OH)_3$, $B(OH)_4$, $BiBO_3$, $Bi_2O_3$, $Bi_2O_5$, and $Bi(OH)_3$. From the standpoint of being easily available at relatively low cost as an industrial raw material, preferred examples thereof include $B_2O_3$, $H_3BO_3$, and $Bi_2O_3$, and especially preferred examples thereof include $H_3BO_3$. One of these other additives 2 may be used alone, or a mixture of two or more thereof may be used.

In the invention, other additive 1 and other additive 2 may be used in combination besides the compound (additive 1 of the invention) having at least one element (additive element 1 of the invention) selected from the group consisting of As, Ge, P, Pb, Sb, Si, and Sn.

With respect to the range of the total amount of the compound having at least one element selected from the group consisting of As, Ge, P, Pb, Sb, Si, and Sn (additive 1 of the invention), other additive 1, and other additive 2 to be added based on the total molar amount of the transition metal elements for constituting the main component, the lower limit thereof is generally 0.1% by mole or more, preferably 0.3% by mole or more, more preferably 0.5% by mole or more, especially preferably 1.0% by mole or more, and the upper limit thereof is generally less than 8% by mole, preferably 5% by mole or less, more preferably 4% by mole or less, especially preferably 3% by mole or less. In case where the total amount thereof is less than the lower limit, there is a possibility that the effect might not be obtained. In case where the total amount thereof exceeds the upper limit, there is the possibility of resulting in a decrease in battery performance.

<Median Diameter and 90% Cumulative Diameter ($D_{90}$)>

The lithium-transition metal compound powders of the invention have a median diameter which is generally 2 $\mu$m or more, preferably 2.5 $\mu$m or more, more preferably 3 $\mu$m or more, even more preferably 3.5 $\mu$m or more, most preferably 4 $\mu$m or more, and is generally 20 $\mu$m or less, preferably 19 $\mu$m or less, more preferably 18 $\mu$m or less, even more preferably 17 $\mu$m or less, most preferably 15 $\mu$m or less. In case where the median diameter thereof is less than the lower limit, there is a possibility that the powders might pose a problem concerning applicability when a positive-electrode active material layer is formed. In case where the median diameter thereof exceeds the upper limit, there is the possibility of resulting in a decrease in battery performance.

The secondary particles of each of the lithium-transition metal compound powders of the invention have a 90% cumulative diameter ($D_{90}$) which is generally 30 $\mu$m or less, preferably 25 $\mu$m or less, more preferably 22 $\mu$m or less, most preferably 20 $\mu$m or less, and is generally 3 $\mu$m or more, preferably 4 $\mu$m or more, more preferably 5 $\mu$m or more, most preferably 6 $\mu$m or more. In case where the 90% cumulative diameter ($D_{90}$) thereof exceeds the upper limit, there is the possibility of resulting in a decrease in battery performance. In case where the 90% cumulative diameter thereof is less than the lower limit, there is a possibility that the powders might pose a problem concerning applicability when a positive-electrode active material layer is formed.

In the invention, median diameter as an average particle diameter and 90% cumulative diameter ($D_{90}$) are determined through a measurement made with a known laser diffraction/scattering type particle size distribution analyzer while setting the refractive index at 1.60, the particle diameters being determined on a volume basis. In the invention, a 0.1% by weight aqueous solution of sodium hexametaphosphate was used as a dispersion medium in the measurement.

<Average Primary-Particle Diameter>

The average diameter (average primary-particle diameter) of each of the lithium-transition metal compound powders of the invention is not particularly limited. However, the lower limit thereof is preferably 0.1 $\mu$m or more, more preferably 0.2 $\mu$m or more, most preferably 0.3 $\mu$m or more, and the upper limit thereof is preferably 3 $\mu$m or less, more preferably 2 $\mu$m or less, even more preferably 1.5 $\mu$m or less, most preferably 1.2 $\mu$m or less. In case where the average primary-particle diameter thereof exceeds the upper limit, this may adversely affect powder loading characteristics or may result in a decrease in specific surface area. There hence is a high possibility that battery performances such as rate characteristics and output characteristics might decrease. In case where the average primary-particle diameter thereof is less than the lower limit, there is a possibility that the crystals might have been grown insufficiently and this might pose problems, for example, that the battery has poor reversibility of charge/discharge.

The average primary-particle diameter in the invention is an average diameter determined through an examination with a scanning electron microscope (SEM), and can be determined as the average of the particle diameters of about 10-30 primary particles using an SEM image having a magnification of 10,000 diameters.

<BET Specific Surface Area>

The lithium-transition metal compound powders of the invention each further have a BET specific surface area, which is generally 0.2 $m^2$/g or larger, preferably 0.3 $m^2$/g or larger, more preferably 0.35 $m^2$/g or larger, most preferably 0.4 $m^2$/g or larger, and is generally 3 $m^2$/g or smaller, preferably 2.5 $m^2$/g or smaller, more preferably 2.0 $m^2$/g or smaller, most preferably 1.5 $m^2$/g or smaller. In case where the BET specific surface area thereof is smaller than that range, battery performances are apt to decrease. In case where the BET specific surface area thereof is too large, such powders are less apt to have a high bulk density and there is a possibility that the powders might be apt to pose a problem concerning applicability when a positive-electrode active material is formed.

BET specific surface area can be determined with a known BET specific surface area meter for powders. In the invention, fully automatic specific surface area meter for powders Type AMS 8000, manufactured by Ohkura Riken Co., Ltd., was used to conduct a BET one-point measurement by a continuous fluid process using nitrogen and helium as an adsorbate gas and a carrier gas, respectively. Specifically, a powder sample was degassed by heating at a temperature of 150°C with a mixed gas, subsequently cooled to a liquid-nitrogen temperature to adsorb the mixed gas thereonto, and then heated to room temperature with water to desorb the adsorbed nitrogen gas, and the amount of the desorbed nitrogen gas was measured with a thermal-conductivity detector. The specific surface area of the sample was calculated from the results.

<Pore Characteristics by Mercury Intrusion Method>

The lithium-transition metal compound powders for a positive-electrode material for lithium secondary batteries of the invention preferably satisfy specific requirements in an examination made by the method of mercury intrusion,

The method of mercury intrusion used for evaluating the lithium-transition metal compound powders of the invention is explained below.

The method of mercury intrusion is a technique in which mercury is caused to penetrate into pores of a sample, e.g., porous particles, by applying a pressure thereto and information, such as specific surface area and pore diameter distribution, is obtained from the relationship between the pressure and the amount of the mercury caused to intrude into the pores.

Specifically, a vessel containing a sample therein is evacuated under vacuum and then filled with mercury. The mercury as such does not penetrate into the surface pores of the sample because mercury has a high surface tension. However, when a pressure is applied to the mercury and the pressure is gradually increased, then the mercury gradually penetrates into pores; this penetration into pores proceeds in order of decreasing pore diameter. By recording the change in the surface level of the mercury (i.e., the amount of the mercury which has intruded into pores) while continuously increasing the pressure, a mercury intrusion curve which shows a relationship between the pressure applied to the mercury and the amount of the mercury that has intruded is obtained.

When the shape of a pore is assumed to be cylindrical and the radius thereof, the surface tension of mercury, and the content angle are expressed by r, δ and θ, respectively, then the magnitude of force required for pushing the mercury out of the pore is expressed by -2πrδ(oosθ) (this value is positive when θ>90°). The magnitude of force required for pushing mercury into the pore at a pressure of P is expressed by $\pi r^2 P$. From a balance between these forces, the following mathematical expression (1) and mathematical expression (2) are derived.

$$-2\pi r\delta(\cos\theta) = \pi r^2 P \qquad (1)$$

$$Pr = -2\delta(\cos\theta) \qquad (2)$$

In the case of mercury, a surface tension δ of about 480 dyn/cm and a contact angle 0 of about 140° are generally used frequently. In the case where these values are used, the radius of the pore into which mercury intrudes at a pressure of P is expressed by the following mathematical expression (3).

[Math. 1]

$$r\ (nm) = \frac{7.5 \times 10^8}{P\ (Pa)} \qquad \cdots(3)$$

Namely, there is a correlation between the pressure P applied to the mercury and the radius r of the pore into which the mercury penetrates. It is therefore possible to obtain, on the basis of the resultant mercury intrusion curve, a pore distribution curve which shows a relationship between the radius dimensions of the pores of the sample and the volumes of the pores. For example, when the pressure P is changed from 0.1 MPa to 100 MPa, a measurement can be made with respect to pores ranging from about 7,500 nm to about 7.5 nm.

Incidentally, with respect to approximate limits of measurement in determination of pore radii by the method of mercury intrusion, the lower limit is about 2 nm or more and the upper limit is about 200 μm or less. It can be said that as compared with the nitrogen adsorption method which will be described later, the method of mercury intrusion is suitable for pore distribution analysis of pores having relatively large radii.

A measurement by the method of mercury intrusion can be conducted using an apparatus such as a mercury porosimeter. Examples of the mercury porosimeter include AutoPore, manufactured by Micromeritics Corp., and PoreMaster, manufactured by Quantachrome Instruments.

It is preferred that the lithium-transition metal compound powders of the invention, when examined by the method of mercury intrusion, should give a mercury intrusion curve in which the amount of mercury which intruded during pressure rising from 3.86 kPa to 413 MFa is 0.3-1.0 cm$^3$/g, It is more preferred that the lower limit of the mercury intrusion amount should be generally 0.1 cm$^3$/g or more, more preferably 0.15 cm$^3$/g or more, most preferably 0.2 cm$^3$/g or more, and the mercury intrusion amount is more preferably 0.9 cm$^3$/g or less, even more preferably 0.8 cm$^3$/g or less, most preferably 0.7 cm$^3$/g or less. In case where the mercury intrusion amount exceeds the upper limit of that range, the particles have too large an amount of interstices and when this lithium-transition metal compound powder of the invention is used as a positive-electrode material, the loading of the positive-electrode active material in the positive-electrode plate is low disadvantageously, resulting in a limited battery capacity. On the other hand, in case where the mercury intrusion amount is less than the lower limit of that range, the particles have too small an amount of interstices thereamong and, hence, when this lithium-transition metal compound powder of the invention is used as a positive-electrode material to produce a battery, lithium diffusion between the particles is inhibited, resulting in a decrease in load characteristics.

When the lithium-transition metal compound powders of the invention are examined for pore distribution curve by the method of mercury intrusion described above, the specific main peak explained below usually appears.

In this description, the term "pore distribution curve" means a curve obtained by plotting the radius of a pore as abscissa and plotting as ordinate a value obtained by differentiating the total volume, per unit weight (usually 1 g), of the pores each having a radius not smaller than that radius by the logarithm of that pore radius. Usually, the pore distribution curve is a graph obtained by connecting the points resulting from the plotting. The pore distribution curve obtained by examining a lithium-transition metal compound powder of the invention by the method of mercury intrusion is hereinafter suitably referred to especially as "pore distribution curve according to the invention".

In this description, "peak 1" means a peak which appears in the range of 80 nm to less than 800 nm (pore radius) on a pore distribution curve, and "peak 2" means a peak which appears at 800 nm or larger (pore radius) on a pore distribution curve.

Furthermore, "peak top" in this description means that point on each peak possessed by a pore distribution curve which has the largest ordinate value.

<Peak 1>

The peak 1 possessed by the pore distribution curve according to the invention has a peak top at a pore radius which is generally 80 nm or more, more preferably 90 nm or more, most preferably 100 nm or more, and is generally 800 nm or less, preferably 750 nm or less, more preferably 700 nm or less, even more preferably 650 nm or less, most preferably 600 nm or less. In case where the peak top thereof is located at a pore radius which exceeds the upper limit of that range, this means that the particles have too large an amount of interstices inside and there is a possibility that when this lithium-transition metal compound powder of the invention is used as a positive-electrode material to produce a battery, the resultant electrode might have a reduced density and the battery might be reduced in characteristics such as discharge capacity. On the other hand, in case where the peak top thereof is located at a pore radius less than the lower limit of that range, this means that the particles have no interstices inside and there is a possibility that when this lithium-transition metal compound powder of the invention is used to produce a positive electrode, the battery might have reduced output characteristics.

It is preferred that the peak 1 possessed by the pore distribution curve according to the invention should indicate a pore volume which is generally 0.01 $cm^3$/g or more, preferably 0.02 $cm^3$/g or more, more preferably 0.03 $cm^3$/g or more, most preferably 0.04 $cm^3$/g or more, and is generally 0.2 $cm^3$/g or less, preferably 0,15 $cm^3$/g or less, more preferably 0.1 $cm^3$/g or less, most preferably 0.08 $cm^3$/g or less. In case where the pore volume exceeds the upper limit of that range, the secondary particles have too large an amount of interstices thereamong and there is a possibility that when this lithium-transition metal compound powder of the invention is used as a positive-electrode material, the loading of the positive-electrode active material in the positive-electrode plate might be low disadvantageously, resulting in a limited battery capacity. On the other hand, in case where the pore volume is less than the lower limit of that range, the secondary particles have too small an amount of interstices thereamong and there hence is a possibility that when this lithium-transition metal compound powder of the invention is used as a positive-electrode material to produce a battery, lithium diffusion between the secondary particles might be inhibited, resulting in a decrease in load characteristics.

In the invention, preferred examples of the lithium-transition metal compound powders for a positive-electrode material for lithium secondary batteries include a lithium-transition metal compound powder which, when examined by the method of mercury intrusion, gives a pore distribution curve that has at least one peak 2 having a peak top at a pore radius of 800-4,000 nm and that further has a peak 1 having a peak top at a pore radius of 80 nm or more but less than 800 nm.

<Peak 2>

The pore distribution curve according to the invention may have a plurality of peaks besides the peak 1 described above, and it is preferred that the pore distribution curve should have a peak 2 having a peak top at a pore radius especially in the range of 800-4,000 nm.

The peak 2 possessed by the pore distribution curve according to the invention has a peak top at a pore radius which is generally 800 nm or more, more preferably 900 nm or more, most preferably 1,000 nm or more, and is generally 4,000 nm or less, preferably 3,600 nm or less, more preferably 3,400 nm or less, even more preferably 3,200 nm or less, most preferably 3,000 nm or less. In case where the pore radius corresponding to the peak top thereof exceeds the upper limit of that range, there is a possibility that when this lithium-transition metal compound powder of the invention is used as a positive-electrode material to produce a battery, lithium diffusion in the positive-electrode material might be inhibited or the positive-electrode material might have an insufficient amount of conductive paths, resulting in a decrease in load characteristics. On the other hand, in case where the pore radius corresponding to the peak top thereof is less than the lower limit of that range, there is a possibility that when this lithium-transition metal compound powder of the invention is used to produce a positive electrode, the conductive material and the binder might be required in a larger amount and the loading of the active material in the positive-electrode plate (positive-electrode current collector) might be limited, resulting in a limited battery capacity. In addition, there is a possibility that this powder, because of the reduced particle size, might give a coating fluid which gives a coating film that is mechanically rigid or brittle and is apt to peel off in a winding step during battery assembly.

It is preferred that the peak which is possessed by the pore distribution curve according to the invention and which has a peak top at a pore radius of 800-4,000 nm should indicate a pore volume which is generally 0,1 $cm^3$/g, or more, preferably 0.15 $cm^3$/g or more, more preferably 0.20 $cm^3$/g or more, most preferably 0.25 $cm^3$/g or more, and is generally 0.5 $cm^3$/g or less, preferably 0.45 $cm^3$/g or less, more preferably 0.4 $cm^3$/g or less, most preferably 0.35 $cm^3$/g or less. In case where the pore volume exceeds the upper limit of that range, the particles have too large an amount of interstices and there is a possibility that when this lithium-transition metal compound powder of the invention is used as a positive-electrode material, the loading of the positive-electrode active material in the positive-electrode plate might be low disadvantageously, resulting in a limited battery capacity. On the other hand, in case where the pore volume is less than the lower limit of that range, the particles have too small an amount of interstices thereamong and there hence is a possibility that when this lithium-transition metal compound powder of the invention is used as a positive-electrode material to produce a battery, lithium diffusion between the secondary particles is inhibited, resulting in a decrease in load characteristics.

<Bulk Density>

The lithium-transition metal compound powders of the invention have a bulk density which is generally 1.2 g/cc or higher, preferably 1.3 g/cc or higher, more preferably 1.4 g/cc or higher, most preferably 1.5 g/cc or higher, and is generally 3.0 g/cc or less, preferably 2.9 g/cc or less, more preferably 2.8 g/cc or less, most preferably 2.7 g/cc or less. Bulk densities thereof higher than the upper limit are preferred from the standpoints of powder loading and an improvement in electrode density, but there is a possibility that such a powder might have too small a specific surface area, resulting in a decrease in battery performance. In case where the bulk density thereof is less than the lower limit, there is a possibility that adverse influences might be exerted on powder loading and electrode preparation.

In the invention, the bulk density of a lithium-transition metal compound powder is determined by placing 5-10 g of the powder in a 10-mL measuring cylinder made of glass and tapping the measuring cylinder 200 times at a stroke of about 20 mm, and determining the density of this densified powder (tap density) in g/cc.

<Crystal Structure>

It is preferred that the lithium-transition metal compound powders of the Invention each should be a powder which at least includes a lithium-nickel-manganese-cobalt composite oxide having a lamellar structure and/or a lithium-manganese composite oxide having a spinel structure as a main component. More preferred of such powders is a powder which includes as a main component a lithium-nickel-manganese-cobalt composite oxide having a lamellar structure, because the crystal lattice thereof undergoes sufficient expansion and contraction to enable the effects of the invention to be produced remarkably. Incidentally, in the invention, the term "lithium-nickel-manganese-cobalt composite oxide" also includes a lithium-nickel-manganese-cobalt composite oxide which is a lithium-nickel-manganese composite oxide containing no cobalt.

Here, lamellar structure is described in more detail. Representative crystal systems having a lamellar structure include crystal systems belonging to the $\alpha$-NaFeO$_2$ type, such as LiCoO$_2$ and LiNiO$_2$. These compounds have a hexagonal system, which belongs to the space group

[Math. 2]

$$R\overline{3}m$$

(hereinafter often referred to as "lamellar R(-3)m structure,") because of the symmetry thereof.
However, not all lamellar LiMeO$_2$ has the lamellar R(-3)m structure. For example, LiMnO$_2$, which is called lamellar Mn, has a rhombic system and is a lamellar compound belonging to the space group Pm2m. Furthermore, Li$_2$MnO$_3$, which is called 213 phase, can be expressed also as Li[Li$_{1/3}$Mn$_{2/3}$]O$_2$ and is a monoclinic compound of a structure belonging to the space group C2/m. However, this compound also is a lamellar compound in which a Li layer, a [Li$_{1/3}$Mn$_{2/3}$] layer, and an oxygen layer have been stacked.

Spinel structure is described in further detail. Representative crystal systems having a spinel structure include crystal systems belonging to the $MgAl_2O_4$ type, such as $LiMn_2O_4$. These compounds have a cubic system, which belongs to the space group
[Math. 3]

$$F d \overline{3} m$$

(hereinafter often referred to as "spinel type Fd(-3)m structure") because of the symmetry thereof. However, not all spinel type $LiMeO_4$ has the spinel type Fd(-3)m structure, and there also are spinel type $LiMeO_4$ which belongs to another space group ($P4_332$).

<Composition>

It is preferred that the lithium-containing transition metal compound powders of the invention each should be a lithium-transition metal compound powder represented by the following composition formula (A) or (B). Furthermore, compared to spinel type compounds, lamellar compounds are relatively reduced in Mn dissolution therefrom and exert less influence of Mn on cycle characteristics. These two kinds of compounds hence differ considerably in producing the effects of the invention. Consequently, it is more preferred that the powders of the invention each should be a lithium-transition metal compound powder represented by the following composition formula (A).
1) In the case of lithium-transition metal compound powder represented by the following composition formula (A):

$$Li_{1+x}MO_2 \qquad\qquad (A)$$

In the formula, x is generally 0 or larger, preferably 0.01 or larger, more preferably 0.02 or larger, most preferably 0.03 or larger, and is generally 0.5 or smaller, preferably 0.4 or smaller, more preferably 0.3 or smaller, most preferably 0.2 or smaller. M is elements configured of Ni and Mn or of Ni, Mn, and Co, and the Mn/Ni molar ratio is generally 0.1 or more, desirably 0.3 or more, more desirably 0.5 or more, preferably 0.6 or more, more preferably 0.7 or more, even more preferably 0.8 or more, most preferably 0.9 or more, and is generally 5 or less, preferably 4 or less, more preferably 3 or less, even more preferably 2.5 or less, most preferably 1.5 or less. The Ni/M molar ratio is generally 0 or more, preferably 0.01 or more, more preferably 0.02 or more, even more preferably 0.03 or more, most preferably 0.05 or more, and is generally 0.50 or less, preferably 0.49 or less, more preferably 0.48 or less, even more preferably 0.47 or less, most preferably 0.45 or less. The Co/M molar ratio is generally 0 or more, preferably 0.01 or more, more preferably 0.02 or more, even more preferably 0.03 or more, most preferably 0.05 or more, and is generally 0.50 or less, preferably 0.40 or less, more preferably 0.30 or less, even more preferably 0.20 or less, most preferably 0.15 or less. There are cases where the excess portion of Li which is represented by x has replaced transition metal sites M.

Although the atomic proportion of oxygen amount in composition formula (A) is 2 for reasons of convenience, the proportion thereof may be non-stoichiometric to some degree. When non-stoichiometric, the atomic proportion of oxygen is generally in the range of $2\pm0.2$, preferably in the range of $2\pm0.15$, more preferably in the range of $2\pm0.12$, even more preferably in the range of $2\pm0.10$, especially preferably in the range of $2\pm0.05$.

It is preferred that the lithium-transition metal compound powders of the invention each should be a powder obtained through high-temperature burning conducted in an oxygen-containing atmosphere, from the standpoint of enhancing the crystallinity of the positive-electrode active material. The positive-electrode active material (3) of the invention is characterized by this process.

The lower limit of the burning temperature, especially in the case of lithium-transition metal compounds having a composition represented by composition formula (A), is generally 950°C or higher, preferably 960°C or higher, more preferably 970°C or higher, most preferably 980°C or higher, and the upper limit thereof is 1,200°C or lower, preferably 1,175°C or lower, more preferably 1,150°C or lower, most preferably 1,125°C or lower. In case where the burning temperature is too low, a different phase comes to coexist and crystal structure growth is insufficient, resulting in an enhanced lattice distortion. In addition, too large a specific surface area results. Conversely, in case where the burning temperature is too high, primary particles grow excessively and particle sintering proceeds excessively, resulting in too small a specific surface area.

2) In the case of lithium-transition metal compound represented by the following general formula (B):

$$Li[Li_aM_bMn_{2-b-a}]O_{4+\delta} \qquad\qquad (B)$$

In the formula, M is one or more elements configured of at least one transition metal selected from Ni, Cr, Fe, Co, Cu, Zr, Al, and Mg. Most preferred of these is Ni from the standpoint of high-potential charge/discharge capacity.

The value of b is generally 0.4 or larger, preferably 0.425 or larger, more preferably 0.45 or larger, even more preferably 0.475 or larger, most preferably 0.49 or larger, and is generally 0.6 or smaller, preferably 0.575 or smaller, more preferably 0.55 or smaller, even more preferably 0.525 or smaller, most preferably 0.51 or smaller,

Values of b within that range are preferred because this lithium-transition metal compound has a high energy density per unit weight.

The value of a is generally 0 or larger, preferably 0.01 or larger, more preferably 0.02 or larger, even more preferably 0.03 or larger, most preferably 0.04 or larger, and is generally 0.3 or smaller, preferably 0.2 or smaller, more preferably 0.15 or smaller, even more preferably 0.1 or smaller, most preferably 0.075 or smaller.

When the value of a is within that range, the energy density per unit weight of the lithium-transition metal compound is not considerably impaired and satisfactory load characteristics are obtained. Values of a within that range are hence preferred.

Furthermore, the value of $\delta$ is generally in the range of $\pm 0.5$, preferably in the range of $\pm 0.4$, more preferably in the range of $\pm 0.2$, even more preferably in the range of $\pm 0.1$, especially preferably in the range of $\pm 0.05$.

When the value of $\delta$ is within that range, the crystal structure has high stability and the battery having an electrode produced using this lithium-transition metal compound has satisfactory cycle characteristics and satisfactory high-temperature storability. Values of $\delta$ within that range are hence preferred.

The chemical meaning of lithium composition in the Lithium-nickel-manganese composite oxide as a composition of the lithium-transition metal compound according to the invention is explained below in detail.

The values of a and b in the composition formula of a lithium-transition metal compound shown above can be determined by analyzing the compound for each transition metal and lithium with an inductively coupled plasma emission spectrometer (ICP-AES) and calculating the Li/Ni/Mn ratio.

When the compound is viewed from the standpoint of structure, it is thought that the lithium corresponding to "a" has replaced the same transition metal site and has been incorporated thereinto. By the influence of the lithium corresponding to "a", the average valence of the M and the manganese is larger than 3.5 because of the principle of charge neutrality.

<Carbon Content C>

The lithium-transition metal compound powders of the invention have a carbon content C (% by weight) which is generally 0.005% by weight or higher, preferably 0.01% by weight or higher, more preferably 0.015% by weight or higher, most preferably 0.02% by weight or higher, and is generally 0.25% by weight or less, preferably 0.2% by weight or less, more preferably 0.15% by weight or less, even more preferably 0.1% by weight or less, most preferably 0.07% by weight or less. In case where the carbon content thereof is less than the lower limit, there is the possibility of resulting in a decrease in battery performance. In case where the carbon content thereof exceeds the upper limit, there is a possibility that the battery produced using this powder shows enhanced swelling due to gas evolution or has reduced battery performances.

In the invention, the carbon content C of a lithium-transition metal compound powder is determined through burning in an oxygen stream (in high-frequency heating furnace) and an examination by an infrared absorption method, as will be shown under Examples.

Incidentally, the carbon component contained in a lithium-transition metal compound powder determined by the carbon analysis which will be described later can be considered to indicate information on the amount of adhered carbonic acid compounds, in particular, lithium carbonate. This is because the value obtained on the assumption that the carbon amount determined by the carbon analysis is wholly derived from carbonic acid ions approximately agrees with the concentration of carbonic acid ions determined through analysis by ion chromatography.

On the other hand, there are cases where carbon is detected in an amount exceeding the range specified above, when a treatment for combining with conductive carbon was conducted as a technique for heightening electronic conductivity.

However, the value of C in the case where such a treatment was conducted should not be construed as being limited to the range specified above.

<Suitable Composition>

It is especially preferred that the lithium-transition metal compound powders for a positive-electrode material for lithium secondary batteries of the invention each should be a powder represented by composition formula (A) in which the M site has a configuration of atoms that is represented by the following formula (A') or the following formula (A").
$$M = Li_{z/(2+z)}\{(Ni_{(1+y)/2}Mn_{(1-y)/2})_{1-x}Co_x\}_{2/(2+z)} \qquad (A')$$

(In formula (A'),

$$0 \leq x \leq 0.1,$$

$$-0.1 \leq y \leq 0.1,$$

and

$$(1-x)(0.05-0.98y) \leq z \leq (1-x)(0.20-0.88y).)$$

$$M = Li_{z'/(2+z')}\{(Ni_{(1+y')/2}Mn_{(1-y')/2})_{1-x'}Co_{x'}\}_{2/(2+z')} \qquad (A'')$$

(In composition formula (A"),

$$0.1 < x' \leq 0.35,$$

$$-0.1 \leq y' \leq 0.1,$$

and

$$(1-x')(0.02-0.98y') \leq z' \leq (1-x')(0.20-0.88y').)$$

In formula (A'), the value of x is generally 0 or larger, preferably 0.01 or larger, more preferably 0.02 or larger, even more preferably 0.03 or larger, most preferably 0.04 or larger, and is generally 0.1 or smaller, preferably 0.099 or smaller, most preferably 0.098 or smaller.
The value of y is generally -0.1 or larger, preferably -0.05 or larger, more preferably -0.03 or larger, most preferably -0.02 or larger, and is generally 0.1 or smaller, preferably 0.05 or smaller, more preferably 0.03 or smaller, most preferably 0.02 or smaller.
The value of z is generally (1-x)(0.05-0.98y) or larger, preferably (1-x)(0.06-0.978y) or larger, more preferably (1-x)(0.07-0.98y) or larger, even more preferably (1-x)(0.08-0.98y) or larger, most preferably (1-x)(0.10-0.98y) or larger, and is generally (1-x)(0.20-0.88y) or smaller, preferably (1-x)(0.18-0.88y) or smaller, more preferably (1-x)(0.17-0.88y), most preferably (1-x)(0.15-0.88y) or smaller. In case where the value of z is smaller than the lower limit, electrical conductivity decreases. In case where the value of z exceeds the upper limit, the amount of lithium which has replaced transition metal sites is too large and this results in a possibility that the lithium secondary battery employing this powder might be reduced in performance, for example, reduced in battery capacity. Furthermore, in case where the value of z

is too large, this active-material powder shows the enhanced property of absorbing carbon dioxide gas and hence is apt to absorb carbon dioxide from the air. This powder hence is presumed to come to have a high carbon content.

In formula (A"), the value of x' is generally 0.1 or larger, preferably 0.15 or larger, more preferably 0.2 or larger, even more preferably 0.25 or larger, most preferably 0.30 or larger, and is generally 0.35 or smaller, preferably 0.345 or smaller, most preferably 0.34 or smaller.

The value of y' is generally -0.1 or larger, preferably -0.05 or larger, more preferably -0.03 or larger, most preferably -0.02 or larger, and is generally 0.1 or smaller, preferably 0.05 or smaller, most preferably 0.03 or smaller, most preferably 0.02 or smaller.

The value of z' is generally (1-x')(0.02-0.98y') or larger, preferably (1-x')(0.03-0.98y') or larger, more preferably (1-x')(0.04-0.98y') or larger, most preferably (1-x')(0.05-0.98y') or larger, and is generally (1-x')(0.20-0.88y') or smaller, preferably (1-x')(0.18-0.88y') or smaller, more preferably (1-x')(0, 17-0,88y'), most preferably (1-x')(0,16-0.88y') or smaller. In case where the value of z' is smaller than the lower limit, electrical conductivity decreases. In case where the value of z' exceeds the upper limit, the amount of lithium, which has replaced transition metal sites is too large and this results in a possibility that the lithium secondary battery employing this powder might be reduced in performance, for example, reduced in battery capacity. Furthermore, in case where the value of z' is too large, this active-material powder shows the enhanced property of absorbing carbon dioxide gas and hence is apt to absorb carbon dioxide from the air. This powder hence is presumed to come to have a high carbon content.

In the composition ranges for formulae (A') and (A"), as the values of z and z' approach the lower limits, which are constant ratios, the batteries produced using the powders tend to decrease in rate characteristics and output characteristics. Conversely, as the values of z and z' approach the upper limits, the batteries produced using the powders tend to increase in rate characteristics and output characteristics but decrease in capacity. As the values of y and y' approach the lower limits, i.e., as the manganese/nickel atomic ratio decreases, the charge voltage required for attaining a capacity tends to decrease but batteries in which a high charge voltage has been set tend to decrease in cycle characteristics and safety. Conversely, as the values of y and y' approach the upper limits, batteries in which a high charge voltage has been set tend to be improved in cycle characteristics and safety but tend to decrease in discharge capacity, rate characteristics, and output characteristics. Furthermore, as the values of x and x' approach the lower limits, the batteries produced using the powders tend to decrease in load characteristics such as rate characteristics and output characteristics. Conversely, as the values of x and x' approach the upper limits, the batteries produced using the powders increase in rate characteristics and output characteristics. However, values of x and x' which exceed the upper limits not only result in decreases in cycle characteristics and safety when a high charge voltage has been set, but also result in an increase in material cost. To regulate the composition parameters x, x', y, y', z, and z' so as to be within the specified ranges is an important constituent element for the invention.

The chemical meaning of Li composition (z, z', x, and x') in the lithium-nickel-manganese-cobalt composite oxide as a suitable composition of the lithium-transition metal compound powders of the invention is explained below in more detail.

As stated above, not all lamellar structures are the R(-3)m structure. However, lamellar structures belonging to the R(-3)m structure are preferred from the standpoint of electrochemical performance.

The values of x, x', y, y', z, and z' in the composition formulae of lithium-transition metal compounds can be determined by analyzing the compounds for each transition metal and Li with an inductively coupled plasma emission spectrometer (ICP-AES) and calculating the Li/Ni/Mn/Co ratio.

When the compounds are viewed from the standpoint of structure, it is thought that the Li corresponding to z and z' has replaced the same transition metal site and has been incorporated thereinto. By the influence of the Li corresponding to z and z', the average valence of the Ni is larger than 2 (trivalent Ni generates) because of the principle of charge neutrality. Since z and z' serve to increase the average valence of the Ni, the values of z and z' can be an index to Ni valence (proportion of Ni(III)).

When the Ni valence (m), which changes as the value of z or z' changes, is calculated from each of the composition formulae on the assumption that the valence of the Co is 3 and the valence of the Mn is 4, then the Ni valence (m) is as follows.

[Math. 4]

$$m = 2\left[2 - \frac{1-x-z}{(1-x)\ (1+y)}\right]$$

$$m = 2\left[2 - \frac{1-x'-z'}{(1-x')\ (1+y')}\right]$$

The results of the calculations mean that the valence of the Ni is not determined by z or z' only but is a function of x or x' and of y or y'. When z or z' is 0 and y or y' is 0, then the Ni valence is 2 regardless of the value of or x'. In the case where z or z' is a negative value, this means that the amount of Li contained in the active material is less than the stoichiometric amount; too large negative values thereof result in a possibility that the effects of the invention might not be produced. Meanwhile, the calculation results mean that even when the value of z or z' is constant, the Ni valence in the composition increases as the Ni content therein increases (the value of y or y' increases) and/or the Co content therein increases (the value of x or x' increases). Batteries produced using such a powder having an Ni-rich and/or Co-rich composition have enhanced rate characteristics and output characteristics but are apt to be reduced in capacity. Consequently, it is considered that it is more preferred to define the upper limit and lower limit of the value of z or z' as a function of x or x' and of y or y'.

When the value of x is $0 \le x \le 0.1$, that is, when the amount of Co is small, then not only a cost reduction is attained but also the lithium secondary battery produced using this powder and designed so as to be charged at a high charge voltage is improved in charge/discharge capacity, cycle characteristics, and safety.

On the other hand, when the value of x' is $0.10 < x' \le 0.35$, that is, when the amount of Co is relatively large, then the lithium secondary battery produced using this powder is improved in charge/discharge capacity, cycle characteristics, load characteristics, safety, etc. while attaining a satisfactory balance thereamong.

<Reasons why the lithium-transition metal compound powders of the invention bring about the effects>

Reasons why the lithium-transition metal compound powders of the invention bring about the effects described above are thought to be as follows.

The lithium-transition metal compound powders of the invention each are composed of secondary crystal particles which retain a spherical shape, and give a mercury intrusion curve in which the amount of mercury that intruded during pressure rising is large, showing that the volume of pores present among the crystal grains is large. Consequently, this powder has a surface state which not only enables the battery produced using the powder to have an increased area of contact between the surface of the positive-electrode active material and the electrolytic solution but also brings about an improvement in load characteristics (in particular, low-temperature output characteristics). Furthermore, the particles have highly enhanced crystallinity and have an extremely low content of different phases. As a result, the powder can attain an excellent balance among properties required of a positive-electrode active material and have powder handleability. The powders of the invention are therefore presumed to be preferred.

Lithium-transition metal compounds have the following property. When charge and discharge are conducted, the particles of the positive-electrode active material usually expand and contract upon insertion of lithium ions into the positive-electrode active material and release of the lithium ions therefrom. The degree of the expansion and contraction is high especially in a cycle test conducted at a high voltage. In the invention, however, since crystalline particles of a compound having at least one element selected from the group consisting of As, Ge, P, Pb, Sb, Si, and Sn are present in an inner part of the secondary particles, the crystalline particles of a compound having at least one element selected from the group consisting of As, Ge, P, Pb, Sb, Si, and Sn are presumed to function like a cushion when the particles of the positive-electrode active material expand and contract upon insertion and release of lithium ions. It has become obvious that the present invention therefore produces the effects thereof especially in a cycle test conducted at a high voltage. With respect to the crystallinity of particles, crystalline particles are thought to have smaller amount of crystal deficiency or distortion and attain better diffusibility of, for example, Li, as compared with amorphous particles. It is therefore thought that secondary particles which as a whole have higher crystallinity have a smaller amount of crystal distortion and bring about better battery performances. It is also thought that the particles of a compound having at least one element selected from the group consisting of As, Ge, P, Pb, Sb, Si, and Sn, which are present in an inner part of the secondary particles, also have a smaller amount of crystal distortion and bring about better battery performances, when the particles have higher crystallinity.

process for Producing the Lithium-Transition Metal Compound Powders for Positive-Electrode Material for Lithium Secondary Battery]

Processes for producing the lithium-transition metal compound powders of the invention are not limited to a specific process. However, a process suitable for the production is the process of the invention for producing a lithium-transition metal compound powder for a positive-electrode material for lithium secondary battery, the process including: a slurry preparation step in which a lithium compound, a compound of at least one transition metal selected from V, Cr, Mn, Fe, Co, Ni, and Cu, and additive 1 of the invention are pulverized in a liquid medium to obtain a slurry which contains these compounds evenly dispersed therein; a spray drying step in which the slurry obtained is spray-dried; and a burning step in which the resultant spray-dried powder is burned at 950°C or higher.

This process is explained with respect to a lithium-nickel-manganese-cobalt composite oxide powder as an example. A slurry obtained by dispersing a lithium compound, a nickel compound, a manganese compound, a cobalt compound, and additive 1 of the invention in a liquid medium is spray-dried, and the resultant spray-dried powder is burned in an oxygen-containing gas atmosphere. Thus, the powder can be produced.

The process of the invention for producing a lithium-transition metal compound powder is explained below with respect to, as an example, a process for producing a lithium-nickel-manganese-cobalt composite oxide powder as a preferred embodiment of the invention.

<Slurry Preparation Step>

Of the starting-material compounds to be used for slurry preparation when a lithium-transition metal compound powder is produced by the process of the invention, examples of the lithium compound include $Li_2CO_3$, $LiNO_3$, $LiNO_2$, $LiOH$, $LiOH-H_2O$, $LiH$, $LiF$, $LiCl$, $LiBr$, $LiI$, $CH_3OOLi$, $Li_2O$, $Li_2SO_4$, lithium dicarboxylates, lithium citrate, fatty acid lithium salts, and alkyllithiums. Preferred of these lithium compounds are the lithium compounds containing neither nitrogen nor sulfur nor halogen atoms, from the standpoint that such compounds generate no harmful substance, e.g., $SO_x$ or $NO_x$, upon burning. Also preferred are compounds which are apt to form voids in the secondary particles of the spray-dried powder, for example, by evolving a decomposition gas during the burning. When these points are taken into account, $Li_2CO_3$, $LiOH$, and $LiOH \cdot H_2O$ are preferred, and $Li_2CO_3$ is especially preferred. One of these lithium compounds may be used alone, or two or more thereof may be used in combination.

Examples of the nickel compound include $Ni(OH)_2$, $NiO$, $NiOOH$, $NiCO_3$, $2NiCO_3 \cdot 3Ni(OH)_2 \cdot 4H_2O$, $NiC_2O_4 \cdot 2H_2O$, $Ni(NO_3)_2 \cdot 6H_2O$, $NiSO_4$, $NiSO_4 \cdot 6H_2O$, fatty acid nickel salts, and nickel halides. Preferred of these are nickel compounds such as $Ni(OH)_2$, $NiO$, $NiOOH$, $NiCO_3$, $2NiCO_3 \cdot 3Ni(OH)_2 \cdot 4H_2O$, and $NiC_2O_4 \cdot 2H_2O$ from the standpoint that such compounds generate no harmful substance, e.g., $SO_x$ or $NO_x$, upon burning. Preferred from the standpoints of being available at low cost as an industrial raw material and of having high reactivity are $Ni(OH)_2$, $NiO$, $NiOOH$, and $NiCO_3$. Especially preferred, from the standpoint of readily forming voids in the secondary particles of the spray-dried powder, for example, by evolving a decomposition gas during burning, are $Ni(OH)_2$, $NiOOH$, and $NiCO_3$. One of these nickel compounds may be used alone, or two or more thereof may be used in combination.

Examples of the manganese compound include manganese oxides such as $Mn_2O_3$, $MnO_2$, and $Mn_3O_4$, manganese salts such as $MnCO_3$, $Mn(NO_3)_2$, $MnSO_4$, manganese acetate, manganese dicarboxylates, manganese citrate, and fatty acid manganese salts, the oxyhydroxides, and halides such as manganese chloride. Preferred of these manganese compounds are $MnO_2$, $Mn_2O_3$, $Mn_3O_4$, and $MnCO_3$, because these compounds do not generate a gas such as $SO_x$ or $NO_x$ upon burning and are available at low cost as industrial raw materials. One of these manganese compounds may be used alone, or two or more thereof may be used in combination.

Examples of the cobalt compound include $Co(OH)_2$, $CoOOH$, $CoO$, $Co_2O_3$, $Co_3O_4$, $Co(OCOCH_3)_2 \cdot 4H_2O$, $CoCl_2$, $Co(NO_3)_2 \cdot 6H_2O$, $Co(SO_4)_2 \cdot 7H_2O$, and $CoCO_3$. Preferred of these are $Co(OH)_2$, $CoOOH$, $CoO$, $Co_2O_3$, $Co_3O_4$, and $CoCO_3$, from the standpoint of generating no harmful substance such as $SO_x$ or $NO_x$ during the burning step. More preferred are $Co(OH)_2$ and $CoOOH$ from the standpoints of being industrially available at low cost and having high reactivity. In addition, $Co(OH)_2$, $CoOOH$, and $CoCO_3$ are especially preferred from the standpoint of readily forming voids in the secondary particles of the spray-dried powder, for example, by evolving a decomposition gas during burning. One of these cobalt compounds may be used alone, or two or more thereof may be used in combination.

Besides the starting-material compounds of Li, Ni, Mn, and Co, other compounds can be used for the purpose of introducing any of the other elements shown above through replacement therewith or efficiently forming voids in the secondary particles to be formed by the spray drying which will be described later. The stage at which such a compound to be used here for the purpose of efficiently forming voids in the secondary particles is added can be selected from between the stage which is before starting-material mixing and the stage which is after the mixing, according to the nature of the compound. Especially in the case of a compound which is apt to decompose, for example, upon reception of mechanical shear stress in a mixing step, it is preferred to add the compound after the mixing step.

The additive 1 of the invention is as described hereinabove.

Methods for mixing the starting materials are not particularly limited, and either wet mixing or dry mixing may be used. Examples thereof include methods in which a device such as a ball mill, oscillating mill, or bead mill is used. Wet mixing in which the starting-material compounds are mixed in a liquid medium, e.g., water or an alcohol, is preferred because the starting-material compounds can be more evenly mixed and the reactivity of the mixture in the burning step can be enhanced.

Although the period of mixing varies depending on the mixing method, any mixing period may be used so long as the starting materials are evenly mixed on a particulate level. For example, the period of mixing with a ball mill (wet or dry mixing) is usually about from 1 hour to 2 days. The period of mixing with a bead mill (wet continuous method) is usually about from 0.1 hour to 6 hours in terms of residence time.

It is preferred that in the starting-material mixing stage, the starting materials should be pulverized while being mixed. The degree of the pulverization, which may be determined using the particle diameter of the pulverized starting-material particles as an index, is generally 0.7 $\mu$m or less, preferably 0.6 $\mu$m or less, more preferably 0.55 $\mu$m or less, most preferably 0.5 $\mu$m or less, in terms of average particle diameter (median diameter). In case where the average particle diameter of the starting-material particles which have undergone the pulverization is too large, not only these particles show reduced reactivity in the burning step but also it is difficult to attain an even composition. However, since particle size reduction to a higher degree than required leads to an increase in pulverization cost, it is sufficient to pulverize the starting materials to an average particle diameter of generally 0.01 $\mu$m or more, preferably 0.02 $\mu$m or more, more preferably 0.05 $\mu$m or more. Although means for rendering such a degree of pulverization possible are not particularly limited, a wet pulverization method is preferred. Examples thereof include DYNO-MILL.

In the invention, the median diameter of the pulverized particles in the slurry is a value determined on a volume basis by means of a known laser diffraction/scattering type particle size distribution analyzer while setting the refractive index at 1.24. In the invention, a 0.1% by weight aqueous solution of sodium hexametaphosphate was used as a dispersion medium for the measurement, and the particle diameters were measured after the dispersion had undergone a 5-minute ultrasonic dispersion treatment (output, 30 W; frequency, 22.5 kHz).

<Spray Drying Step>>

After the wet mixing, the slurry is usually subjected to a drying step. Methods for the drying are not particularly limited. However, spray drying is preferred from the standpoints of the evenness, powder flowability, and powder handleability of the particulate object to be yielded, the ability to efficiently produce dry particles, etc.

(Spray-dried Powder)

In the process for producing a lithium-transition metal compound powder, e.g., a lithium-nickel-manganese-cobalt composite oxide powder as an embodiment of the invention, the slurry obtained by wet-pulverizing starting-material compounds and additive 1 of the invention is spray-dried to thereby obtain a powder in which primary particles have aggregated to form secondary particles. This spray-dried powder in which primary particles have aggregated to form secondary particles is a geometrical feature of the spray-dried powder of the invention. Examples of methods for ascertaining the shape include an examination with an SEM and an examination of cross-sections with an SEM.

The powder obtained by the spray drying, which is an unburned precursor of a lithium-transition metal compound powder, e.g., a lithium-nickel-manganese-cobalt composite oxide powder as an embodiment of the invention, has a median diameter (here, the median diameter is a value measured without conducting ultrasonic dispersion treatment) of generally 25 $\mu$m or less, more preferably 20 $\mu$m or less, even more preferably 18 $\mu$m or less, most preferably 16 $\mu$m or less. However, since too small particle diameters tend to be difficult to obtain, the median diameter thereof is generally 3 $\mu$m or more, preferably 4 $\mu$m or more, more preferably 5 $\mu$m or more. In the case where such a particulate object is produced by a spray drying method, the particle diameter thereof can be regulated by suitably selecting a mode of spraying, the rate of feeding a pressurized gas flow, an amount of slurry feeding, drying temperature, etc.

For example, when the slurry obtained by dispersing a lithium compound, a nickel compound, a manganese compound, a cobalt compound, and additive 1 of the invention in a liquid medium is spray-dried and the resultant powder is to be burned to produce a lithium-nickel-manganese-cobalt composite oxide powder, then the spray drying is conducted under the following conditions: when the viscosity of the slurry which is being subjected to the spray drying is expressed by V (cP), an amount of slurry feeding is expressed by S (L/min), and an amount of gas feeding is expressed by G (L/min), then the slurry viscosity V is 50 cP≤V≤10,000 cP and the gas-liquid ratio G/S is 500≤G/S≤10,000.

In case where the slurry viscosity V (cP) is too low, there is a possibility that it might be difficult to obtain a powder which is composed of secondary particles formed by aggregation of primary particles. In case where the slurry viscosity is too high, there is a possibility that the feed pump might go wrong or the nozzle might clog. Consequently, the lower limit of the slurry viscosity V (cP) is generally 50 cP or higher, preferably 100 cP or higher, more preferably 300 cP or higher, most preferably 500 cP, and the lower limit thereof is generally 10,000 cP or less, preferably 7,500 cP or less, more preferably 6,500 cP or less, most preferably 6,000 cP or less.

In case where the glass-liquid ratio G/S is less than the lower limit, this is apt to result in secondary particles having too large a size and in reduced drying properties, etc. In case where the gas-liquid ratio exceeds the upper limit, there is a possibility that productivity might decrease. Consequently, the lower limit of the glass-liquid ratio G/S is generally 500 or more, preferably 800 or more, more preferably 1,000 or more, most preferably 1,500 or more, and the upper limit thereof is generally 10,000 or less, preferably 9,000 or less, more preferably 8,000 or less, most preferably 7,500 or less.

The slurry feed rate S and the gas feed rate G are suitably set by changing the viscosity of the slurry which is subjected to the spray drying and selecting the specifications of the spray dryer to be used, etc.

In the process of the invention, the spray drying is not particularly limited so long as the slurry viscosity V (cP) described above is satisfied and as the spray drying is conducted while regulating the slurry feed rate and the gas feed rate so that these rates are suitable for the specifications of the spray dryer being used and satisfy the gas-liquid ratio G/S described above. Other conditions are suitably set in accordance with the kind of the device used, etc. However, it is preferred to further select the following conditions.

Namely, it is preferred to spray-dry the slurry at a temperature which is generally 50°C or higher, preferably 70°C or higher, more preferably 120°C or higher, most preferably 140°C or higher, and is generally 300°C or lower, preferably 250°C or lower, more preferably 200°C or lower, most preferably 180°C or lower. In case where the temperature is too high, there is a possibility that the spray drying might yield particles in which the proportion of particles having a hollow structure is high, resulting in a decrease in densified-powder density. On the other hand, in case where the temperature is too low, there is a possibility that moisture condensation might occur at the powder discharge part to cause problems such as powder adhesion, clogging, etc.

<Burning Step>

The unburned precursor thus obtained is subsequently burned.

The term "unburned precursor" in the invention means an unburned precursor which is obtained by treating the spray-dried powder and which is a precursor for a lithium-transition metal compound, e.g., a lithium-nickel-manganese-cobalt composite oxide. For example, the compound described above which generates a decomposition gas or sublimes during burning to form voids in the secondary particles may be incorporated into the spray-dried powder to obtain an unburied precursor.

Conditions for this burning depend on the composition and the lithium compound used as a starting material. However, there are the following tendencies. In case where the burning temperature is too high, primary particles grow excessively and particle sintering proceed excessively, resulting in too small a specific surface area. Conversely, in case where the burning temperature is too low, a different phase comes to coexist and crystal structure growth is insufficient, resulting in an enhanced lattice distortion. In addition, too large a specific surface area results. The burning temperature is generally 950°C or higher, preferably 960°C or higher, more preferably 970°C or higher, most preferably 980°C or higher, and is generally 1,200°C or lower, preferably 1,175°C or lower, more preferably 1,150°C or lower, most preferably 1,125°C or lower.

For the burning, use can be made, for example, of a box furnace, tube furnace, tunnel furnace, rotary kiln, or the like. The burning step is usually divided into three portions, i.e., heating, maximum-temperature holding, and cooling. The second portion, i.e., maximum-temperature holding, need not be conducted once, and may be conducted in two or more steps according to purposes. The steps of heating, maximum-temperature holding, and cooling may be conducted twice or further repeated so that a disaggregation step, which is a step for eliminating the aggregated state to such a degree that the secondary particles are not destroyed, or a pulverization step, which is a step for pulverizing the secondary particles to the primary particles or to a finer powder, is conducted before each repetition.

In the case where the burning is conducted in two steps, it is preferred that the powder in the first step should be held at a temperature which is not lower than the temperature at which the Li source begins to decompose and is not higher than the temperature at which the Li source melts. For example, in the case where lithium carbonate is used, the holding temperature in the first step is preferably 400°C or higher, more preferably 450°C or higher, even more preferably 500°C or higher, most preferably 550°C or higher, and is generally 850°C or lower, more preferably 800°C or lower, even more preferably 780°C or lower, most preferably 750°C or lower.

In the heating step, which precedes the maximum-temperature holding step, the temperature of the furnace interior is elevated at a heating rate of generally 1-15 °C/min. In case where the heating rate is too low, the heating requires much time and is industrially disadvantageous. In case where the heating rate is too high, the temperature of the furnace interior does not become a set temperature, depending on the furnace. The heating rate is preferably 2 °C/min or higher, more preferably 3 °C/mm or higher, and is preferably 20 °C/min or lower, more preferably 18 °C/mm or lower.

The holding period in the maximum-temperature holding step varies depending on the temperature. However, when the temperature is within the range shown above, the holding period is generally 15 minutes or longer, preferably 30 minutes or longer, more preferably 45 minutes or longer, most preferably 1 hour or longer, and is generally 24 hours or shorter, preferably 12 hours or shorter, more preferably 9 hours or shorter, most preferably 6 hours or shorter. In case where the burning temperature is too short, it is difficult to obtain a lithium-transition metal compound powder having satisfactory crystallinity. Too long burning periods are impracticable. Too long burning periods are disadvantageous because the resultant powder necessitates disaggregation or is difficult to disaggregate.

In the cooling step, the temperature of the furnace interior is lowered at a cooling rate of generally 0.1-15 °C/min. Too low cooling rates are industrially disadvantageous since the cooling requires much time. However, too high cooling rates tend to render the product poor in evenness or to accelerate deterioration of the vessel. The cooling rate is preferably 1 °C/min or higher, more preferably 3 °C/min or higher, and is preferably 20 °C/min or less, more preferably 15 °C/mm or less.

With respect to the atmosphere in which the burning is conducted, there is a partial-oxygen-pressure region which is suitable for the composition of the lithium-transition metal compound powder to be obtained. Various suitable gas atmospheres for satisfying the region are hence used. Examples of the gas atmospheres include oxygen, air, nitrogen, argon hydrogen, carbon dioxide, and gaseous mixtures thereof. In the case of a lithium-nickel-manganese-cobalt composite oxide powder as an embodiment of the invention, use can be made of an oxygen-containing gas atmosphere, e.g., air. Usually, the atmosphere is made to have an oxygen concentration which is 1% by volume or higher, preferably 10% by volume or higher, more preferably 15% by volume or higher, and is 100% by volume or less, preferably 50% by volume or less, more preferably 25% by volume or less.

When the production process described above is used to produce a lithium-transition metal compound powder of the invention, e.g., a lithium-nickel-manganese-cobalt composite oxide powder having the specific composition described above, using production conditions which are kept constant, then the desired Li/Ni/Mn/Co molar ratio can be controlled by regulating the ratio in which a lithium compound, nickel compound, manganese compound, cobalt compound, and additive 1 of the invention are mixed when these compounds are dispersed in a liquid medium to prepare a slurry.

According to the lithium-transition metal compound powder of the invention thus obtained, e.g., a lithium-nickel-manganese-cobalt composite oxide powder, a positive-electrode material for lithium secondary batteries which have a high capacity, excellent low-temperature output characteristics and storability, and a satisfactory balance among performances is provided.


[Positive Electrode for Lithium Secondary Battery]

The positive electrode of the invention for lithium secondary batteries is a positive electrode obtained by forming a positive-electrode active material layer including both a lithium-transition metal compound powder of the invention for a positive-electrode material for lithium secondary batteries and a binder on a current collector.

The positive-electrode active material layer is formed usually by dry-mixing a positive-electrode material with a binder optionally together with a conductive material, a thickener, etc., forming the mixture into a sheet, and press-bonding the sheet to a positive-electrode current collector, or by dissolving or dispersing those materials in a liquid medium to obtain a slurry, applying the slurry to a positive-electrode current collector, and drying the slurry applied,

As the material of the positive electrode current collector, use is generally made of a metallic material such as aluminum, stainless steel, a nickel-plated material, titanium, or tantalum or a carbon material such as a carbon cloth or carbon paper. Metallic materials are preferred of these, and aluminum is especially preferred. With respect to shape, examples of the shapes of metallic materials include metal foils, metal cylinders, metal coils, metal sheets, thin metal films, expanded metals, punching metals, and metal foam, and examples of the shapes of carbon materials include carbon plates, thin carbon films, and carbon cylinders. Of these, thin metal films are preferred, because these materials are presently being used in products produced industrially. The thin films may be suitably processed into a mesh form.

In the case where a thin film is used as the positive-electrode current collector, the thin film may have any desired thickness. However, the suitable thickness thereof is generally 1 $\mu$m or more, preferably 3 $\mu$m or more, more preferably 5 $\mu$m or more, and is generally 100 mm or less, preferably 1 mm or less, more preferably 50 $\mu$m or less. In case where the thickness thereof is less than that range, there is a possibility that the thin film might be deficient in the strength required of a current collector. On the other hand, in case where the thickness thereof is larger than that range, there is a possibility that the film might have impaired handleability.

The binder to be used for producing the positive-electrode active material layer is not particularly limited. In the case of coating fluid application, any binder may be used so long as the binder is a material which is stable to the liquid medium to be used in electrode production. Examples thereof include resinous polymers such as polyethylene, polypropylene, poly(ethylene terephthalate), poly(methyl methacrylate), aromatic polyamides, cellulose, and nitrocellulose, rubbery polymers such as SBR (styrene/butadiene rubbers), NBR (acrylonitrile/butadiene rubbers), fluororubbers, isoprene rubbers, butadiene rubbers, and ethylene/propylene rubbers, thermoplastic elastomeric polymers such as styrene/butadiene/styrene block copolymers and products of hydrogenation thereof, EPDM (ethylene/propylene/diene terpolymers), styrene/ethylene/butadiene/ethylene copolymers, and styrene/isoprene/styrene block copolymers and products of hydrogenation thereof, flexible resinous polymers such as syndiotactic 1,2-polybutadiene, poly(vinyl acetate), ethylene/vinyl acetate, copolymers, and propylene/$\alpha$-olefin copolymers, fluoropolymers such as poly(vinylidene fluorite), polytetrafluoroethylene, fluorinated poly(vinylidene fluoride), and polytetrafluoroethylene/ethylene copolymers, and polymer compositions which have ionic conductivity with respect to alkali metal ions (in particular, lithium ions). One of these substances may be used alone, or any desired combination of two or more thereof may be used in any desired proportion.

The content of the binder in the positive-electrode active material layer is generally 0.1% by weight or more, preferably 1% by weight or more, more preferably 5% by weight or more, and is generally 80% by weight or less, preferably 60% by weight or less, more preferably 40% by weight or less, most preferably 10% by weight or less. In case where the content of the binder is too low, there is a possibility that the positive-electrode active material cannot be sufficiently held and the positive electrode might have insufficient mechanical strength, resulting in impaired battery performances, e.g., cycle characteristics. On the other hand, in case where the content thereof is too high, there is the possibility of resulting in decreases in battery capacity and electrical conductivity.

A conductive material is usually incorporated into the positive-electrode active material layer in order to heighten electrical conductivity. Although the kind thereof is not particularly limited, examples thereof include metallic materials such as copper and nickel and carbon materials such as graphites including natural graphites and artificial graphites, carbon blacks such as acetylene black, and amorphous carbon such as needle coke. One of these substances may be used alone, or any desired combination of two or more thereof may be used in any desired proportion. The content of the conductive material in the positive-electrode active material layer is generally 0.01% by weight or more, preferably 0.1% by weight or more, more preferably 1% by weight or more, and is generally 50% by weight or less, preferably 30% by weight or less, more preferably 20% by weight or less. Too low contents of the conductive material may result in insufficient electrical conductivity. Conversely, too high contents thereof may result in a decrease in battery capacity.

The liquid medium for slurry formation is not particularly limited in the kind thereof so long as the liquid medium is a solvent in which the lithium-transition metal compound powder serving as a positive-electrode material, a binder, and optional ingredients which are a conductive material and a thickener can be dissolved or dispersed. Either an aqueous solvent or an organic solvent may be used. Examples of the aqueous solvent include water and alcohols. Examples of the organic solvent include N-methylpyrrolidone (NMP), dimethylformamide, dimethylacetamide, methyl ethyl ketone, cyclohexanone, methyl acetate, methyl acrylate, diethyltriamine, N,N-dimethylaminopropylamine, ethylene oxide, tetrahydrofuran (THF), toluene, acetone, dimethyl ether, dimethylacetamide, hexamethylphosphoramide, dimethyl sulfoxide, benzene, xylene, quinoline, pyridine, methylnaphthalene, and hexane. Especially in the case of using an aqueous medium, a dispersant is added in combination with the thickener and the ingredients are slurried using a latex of, for example, SBR. One of those solvents may be used alone, or any desired combination of two or more thereof may be used in any desired proportion.

The content of the lithium-transition metal compound powder of the invention as a positive-electrode material in the positive-electrode active material layer is generally 10% by weight or more, preferably 30% by weight or more, more preferably 50% by weight or more, and is generally 99.9% by weight or less, preferably 99% by weight or less. In case where the content of the lithium-transition metal compound powder in the positive-electrode active material layer is too high, the positive electrode tends to be insufficient in strength. When the content thereof is too low, there are cases where the capacity is insufficient.

The thickness of the positive-electrode active material layer is generally about 10-200 $\mu$m.

With respect to the electrode density of the positive electrode which has been pressed, the lower limit thereof is generally 2.2 g/cm$^3$ or higher, preferably 2.4 g/cm$^3$ or higher, especially preferably 2.6 g/cm$^3$ or higher, and the upper limit thereof is generally 4.2 g/cm$^3$ or less, preferably 4.0 g/cm$^3$ or less, especially preferably 3.8 g/cm$^3$ or less.

It is preferred that the positive-electrode active material layer obtained by slurry application and drying should be densified with, for example, a roller press in order to heighten the loading density of the positive-electrode active material.

Thus, the positive electrode of the invention for lithium secondary batteries can be prepared.

[Lithium Secondary Battery]

The lithium secondary battery of the invention is equipped with the positive electrode of the invention for lithium secondary batteries which is capable of occluding and releasing lithium, a negative electrode which is capable of occluding and releasing lithium, and a nonaqueous electrolyte which contains a lithium salt as an electrolyte salt. The battery may be further equipped with a separator which has been interposed between the positive electrode and the negative electrode and which holds the nonaqueous electrolyte. It is desirable to thus interpose a separator in order to effectively prevent short-circuiting from occurring upon contact between the positive electrode and the negative electrode.

<Negative Electrode>

The negative electrode usually is configured by forming a negative-electrode active material layer on a negative-electrode current collector in the same manner as for the positive electrode.

As the material of the negative-electrode current collector, use is made of a metallic material such as copper, nickel, stainless steel, or nickel-plated steel or a carbon material such as a carbon cloth or carbon paper. Examples of the metallic material, of these, include metal foils, metal cylinder, metal coils, metal sheets, and thin metal films, and examples of the carbon material include carbon plates, thin carbon films, and carbon cylinders. Of these, thin metal films are preferred because these materials are presently being used in products produced industrially. The thin films may be suitably processed into a mesh form. In the case where a thin metal film is used as the negative-electrode current collector, the suitable range of the thickness thereof is the same as the range described above with respect to the positive-electrode current collector.

The negative-electrode active material layer is configured so as to contain a negative-electrode active material. The negative-electrode active material is not limited in the kind thereof so long as the active material is capable of electrochemically occluding and releasing lithium ions, Usually, however, a carbon material capable of occluding and releasing lithium is used from the standpoint of high safety.

The carbon material is not particularly limited in the kind thereof. Examples thereof include graphites including artificial graphites and natural graphites and pyrolysis products obtained by pyrolyzing organic substances under various conditions. Examples of the products of pyrolysis of organic substances include coal coke, petroleum coke, carbonized coal pitch, carbonized petroleum pitch, products obtained by oxidizing and then carbonizing these pitches, needle coke, pitch coke, products of carbonization of phenolic resins, crystalline cellulose, or the like, carbon materials obtained by partly graphitizing these materials, furnace black, acetylene black, and pitch-based carbon fibers. Preferred of these are graphites. Especially suitable are artificial graphites produced by subjecting readily graphitizable pitches obtained from various raw materials to a high-temperature heat treatment, purified natural graphites, graphite materials which are these graphites that contain a pitch, or the like. Such graphites which have undergone various surface treatments are mainly used. One of these carbon materials may be used alone, or two or more thereof may be used in combination.

In the case where a graphite material is used as the negative-electrode active material, it is preferred that this graphite material should be one in which the value of d (interplanar spacing, $d_{002}$) for the lattice planes (002), as determined by X-ray diffractometry in accordance with the method of the Japan Society for Promotion of Scientific Research, is generally 0.335 nm or more and is generally 0.34 nm or less, preferably 0.337 nm or less.

It is also preferred that the graphite material should have an ash content of generally 1% by weight or less, especially 0.5% by weight or less, in particular 0.1% by weight or less, based on the weight of the graphite material.

Furthermore, it is preferred that the crystallite size (Lc) of the graphitic material, as determined by X-ray diffractometry in accordance with the method of the Japan Society for Promotion of Scientific Research, should be generally 30 nm or more, especially 50 nm or more, in particular 100 nm or more.

It is furthermore preferred that the median diameter of the graphite material as determined by the laser diffraction/scattering method should be generally 1 $\mu$m or more, especially 3 $\mu$m or more, desirably 5 $\mu$m or more, in particular 7 $\mu$m or more, and be generally 100 $\mu$m or less, especially 50 $\mu$m or less, desirably 40 $\mu$m or less, in particular 30 $\mu$m or less.

The graphite material has a BET specific surface area which is generally 0.5 m$^2$/g or larger, preferably 0.7 m$^2$/g or larger, more preferably 1.0 m$^2$/g or larger, even more preferably 1.5 m$^2$/g or larger, and is generally 25.0 m$^2$/g or smaller, preferably 20.0 m$^2$/g or smaller, more preferably 15.0 m$^2$/g or smaller, even more preferably 10.0 m$^2$/g or smaller. Moreover, the graphite material preferably is one in which when this graphite material is examined by Roman spectroscopy using argon laser light, the ratio of the intensity $I_A$ of a peak $P_A$ detected in the range of 1,580-1,620 cm$^{-1}$ to the intensity $I_B$ of a peak $P_B$ detected in the range of 1,350-1,370 cm$^{-1}$, $I_A/I_B$, is from 0 to 0.5. The peak $P_A$ has a half-value width of preferably 26 cm$^{-1}$ or less, more preferably 25 cm$^{-1}$ or less.

Other materials capable of occluding and releasing lithium can be used as a negative-electrode active material besides any of the various carbon materials described above. Examples of negative-electrode active materials other than carbon materials include metal oxides such as tin oxide and silicon oxide, nitrides such as $Li_{2.6}Co_{0.4}N$, elemental lithium, and lithium alloys such as lithium-aluminum alloys. Any one of these materials other than carbon materials may be used alone, or two or more thereof may be used in combination. These materials may be used in combination with any of the carbon materials.

The negative-electrode active material layer can usually be produced by slurrying the negative-electrode active material and a binder with a liquid medium optionally together with a conductive material and a thickener, applying the slurry to a negative-electrode current collector, and drying the slurry applied, in the same manner as for the positive-electrode active material layer. As the liquid medium for slurry formation and as the binder, thickener, conductive material, etc., use can be made of the same ingredients as described above with respect to the positive-electrode active material layer.

<Nonaqueous Electrolyte>

As the nonaqueous electrolyte, use can be made, for example, of a known organic electrolytic solution, solid polymer electrolyte, gel-state electrolyte, inorganic solid electrolyte, or the like. Preferred of these is an organic electrolytic solution. The organic electrolytic solution is configured by dissolving a solute (electrolyte) in an organic solvent.

The kind of the organic solvent is not particularly limited. For example, a carbonate, ether, ketone, sulfolane compound, lactone, nitrile, chlorinated hydrocarbon, ether, amine, ester, amide, phosphoric ester compound, or the like can be used. Representative examples thereof include dimethyl carbonate, diethyl carbonate, ethyl methyl carbonate, propylene carbonate, ethylene carbonate, vinylene carbonate, vinylethylene carbonate, tetrahydrofuran, 2-methyltetrahydrofuran, 1,4-dioxane, 4-methyl-2-pentanone, 1,2-dimethoxyethane, 1,2-diethoxyethane, γ-butyrolactone, 1,3-dioxolane, 4-methyl-1,3-dioxolane, diethyl either, sulfolane, methylsulfolane, acetonitrile, propionitrile, benzonitrile, butyronitrile, valeronitrile, 1,2-dichloroethane, dimethylformamide, dimethyl sulfoxide, trimethyl phosphate, and triethyl phosphate. In each of these compounds, the hydrogen atoms may have been partly replaced with halogen atoms. These compounds may be used alone, or a mixed solvent composed of two or more thereof can be used.

It is preferred that the organic solvent should include a high-permittivity solvent in order to dissociate the electrolyte salt. The term high-permittivity solvent herein means a compound which has a dielectric constant at 25°C of 20 or more. Preferred of high-permittivity solvents that can be included in the electrolytic solvent are ethylene carbonate, propylene carbonate, and compounds formed by replacing one or more hydrogen atoms of the carbonates with another element, e.g., a halogen, or with an alkyl group or the like. The proportion of the high-permittivity solvent in the electrolytic solution is preferably 20% by weight or more, more preferably 25% by weight or more, most preferably 30% by weight or more. When the content of the high-permittivity solvent is less than that range, there are cases where the desired battery characteristics are not obtained.

An additive which forms, on the surface of the negative electrode, a satisfactory coating film that renders efficient charge/discharge of lithium ions possible may be added to the organic electrolytic solution in any desired proportion. Examples thereof include a gas such as $CO_2$, $N_2O$, $CO$, or $SO_2$, vinylene carbonate, and a polysulfide $S_x^{2-}$. Especially preferred of such additives is vinylene carbonate.
Furthermore, an additive which is effective in improving cycle life or output characteristics, such as lithium difluorophosphate, and an additive which is effective in inhibiting gas evolution during high-temperature storage, such as propanesultone or propenesultone, may be added to the organic electrolytic solution in any desired proportion.

The kind of the electrolyte salt also is not particularly limited, and any desired conventionally known solute can be used. Examples thereof include $LiClO_4$, $LiAsF_6$, $LiPF_6$, $LiBF_4$, $LiB(C_6H_5)_4$, LiBOB, LiCl, LiBr, $CH_3SO_3Li$, $CF_3SO_3Li$, $LiN(SO_2CF_3)_2$, $LiN(SO_2C_2F_5)_2$, $LiC(SO_2CF_3)_3$, and $LiN(SO_3CF_3)_2$. Any desired one of these electrolyte salts may be used alone, or any desired combination of two or more thereof may be used in any desired proportion.

Such a lithium salt as an electrolyte salt is incorporated into the electrolytic solution so that the concentration thereof becomes generally 0.5-1.5 mol/L, When the lithium salt concentration in the electrolytic solution is less than 0.5 mol/L or exceeds 1.5 mol/L, there are cases where the electrolytic solution has a reduced electrical conductivity to exert adverse influences on battery characteristics. The lower limit and the upper limit of the concentration thereof are preferably 0.75 mol/L or more and 1.25 mol/L or less, respectively.

In the case of using a solid polymer electrolyte also, the kind thereof is not particularly limited. As the solid electrolyte, use can be made of any desired known inorganic substance which is crystalline or amorphous. Examples of the crystalline inorganic solid electrolyte include LiI, $Li_3N$, $Li_{1-x}J_xTi_{2-x}(PO_4)_3$ (J = Al, Sc, Y, La), and $Li_{0.5-3x}RE_{0.5+x}TiO_3$ (RE = La, Pr, Nd, Sm). Examples of the amorphous inorganic solid electrolyte include oxide glasses such as 4.9LiI-34.1$Li_2O$-61$B_2O_5$ and 33.3$Li_2O$-66.7$SiO_2$. Any desired one of these electrolytes may be used alone, or any desired combination of two or more thereof may be used in any desired proportion.

<Separator>

In the case where the organic electrolytic solution described above is used as the electrolyte, a separator is interposed between the positive electrode and the negative electrode in order to prevent short-circuiting between the electrodes. Although the material and shape of the separator are not particularly limited, it is preferred that the separator should be stable to the organic electrolytic solution to be used, have excellent liquid retentivity, and be capable of reliably preventing short-circuiting from occurring between the electrodes. Preferred examples thereof include microporous films or sheets, nonwoven fabrics, and the like which are constituted of various polymeric materials. Examples of the polymeric materials that can be used include nylons, cellulose acetate, nitrocellulose, polysulfones, polyacrylonitrile, poly(vinylidene fluoride), and polyolefin polymers such as polypropylene, polyethylene, and polybutene. Polyolefin polymers are preferred especially from the standpoint of chemical and electrochemical stability, which is an important factor in separators. Polyethylene is especially desirable from the standpoint of self-shutoff temperature, which is one purpose of the use of a separator in a battery.

In the case of using a separator made of polyethylene, it is preferred to employ ultrahigh-molecular polyethylene from the standpoint of high-temperature shape retentivity. The lower limit of the molecular weight thereof is preferably 500,000, more preferably 1,000,000, most preferably 1,500,000. On the other hand, the upper limit of the molecular weight thereof is preferably 5,000,000, more preferably 4,000,000, most preferably 3,000,000. This is because polyethylene having too high a molecular weight has too low flowability and there are hence cases where the pores of the separator do not close when the separator is heated.

<Battery Shape>

The lithium secondary battery of the invention is produced by assembling the positive electrode of the invention for lithium secondary batteries described above, a negative electrode, an electrolyte, and a separator, which is used according to need, into a suitable shape. It is possible to use other constituted elements, e.g., a case, according to need. The shape of the lithium secondary battery of the invention is not particularly limited, and can be suitably selected from various shapes in general use according to the intended use thereof. Examples of the shapes in general use include a cylinder type obtained by spirally arranging sheet electrodes and separators, a cylinder type of an inside-out structure which includes a combination of a pellet electrode and a separator, and a coin type in which pellet electrodes and a separator have been stacked. Methods for assembling the battery also are not particularly limited, and a suitable method can be selected from various methods in common use according to the desired battery shape.

<Charging Potential of Positive Electrode in fully charged State>

The lithium secondary battery of the invention produces the effects thereof when the battery has been designed so that the positive electrode in a fully charged state has a charging potential of 4.4 V (vs. Li/Li$^+$) or higher, as in the following Examples. Namely, the lithium-transition metal compound powders of the invention for a positive electrode material for lithium secondary batteries effectively produce the effects of the invention when used in lithium secondary batteries designed to be charged at a high charging potential. However, the lithium secondary battery of the invention sufficiently produces the effects thereof even at a low potential less than 4.4 V (vs. Li/Li$^+$).

General embodiments of the lithium secondary battery of the invention have been explained above. However, the lithium secondary battery of the invention should not be construed as being limited to the embodiments, and various modifications can be made therein within the spirit of the invention.

Examples

The invention will be explained below in more detail by reference to Examples. However, the invention should not be construed as being limited by the Examples unless the invention departs from the spirit thereof.

[Methods for determining Properties]

Properties of the lithium-transition metal compound powders produced in the Examples and Comparative Examples which will be given later were determined in the following manners.

<Composition Analysis of Surface of Primary Particles by X-ray Photoelectron Spectroscopy (XPS)>

The analysis was conducted under the following conditions using X-ray photoelectron spectroscope "ESCA-5700", manufactured by Physical Electronics, Inc.

X-ray source: monochromatic Alk$\alpha$
Analysis area: 0.8 mm in diameter
Pickup angle: 45°
Amount determination method: The area of each of the peaks assigned to Bls, Mn $2P_{1/2}$, Co $2P_{3/2}$, Ni $2P_{3/2}$, Nb 3d, Mo 3d, Sn $3d_{5/2}$, W 4f, and P 2P is corrected with sensitivity.

<Preparation of Cross-section of Secondary Particles>

A cross-section of secondary particles was prepared using a cross-section polisher (SM-09010) manufactured by JEOL Ltd., under the conditions of an accelerating voltage of 5 kV.

<SEM Examination Device and Conditions>

Using a scanning electron microscope (SU-70) manufactured by HITACHI, an SEM examination was conducted under the conditions of an electron gun accelerating voltage of 3 kV. In the examination mode used, a YAG type reflected-electron detector was used to conduct the examination (hereinafter, the image obtained is referred to as reflected-electron image).

Since the amount of reflected electrons is proportional to the average atomic number of the elements constituting the sample, the reflected-electron image has a contrast in which the brightness increases in proportion to the average atomic number. The area which is darker than the positive-electrode active material can be assigned to a compound having an atom of P (or Si). The exceedingly bright areas which are observed in the vicinity of the interface between primary particles are assigned to a compound having an atom of W.

Incidentally, the contrast of a reflected-electron image is influenced mainly by information on composition and information on surface shape. However, since the cross-sections prepared here are exceedingly smooth, the information on surface shape is substantially negligible. Namely, the contrast is mostly governed by the composition.

<SEM-EDX Examination Device and Conditions>

SEM-EDX analysis was conducted using OXFORD INSTRUMENTS INCA Energy at an electron gun accelerating voltage of 3 kV.

<Ascertainment of Crystal Phase (Lamellar Structure), Measurement of Half-value Width FWHM(110), Ascertainment as to whether Different-phase Peak was present in (018), (110), and (113) Diffraction Peaks, and Calculation of Integrated Intensities of Different-phase Peak/Original-crystal-phase Peak and Ratio of the Integrated Intensities>
The properties were determined by the X-ray powder diffractometry using a CuKα ray described below.
With respect to the (018), (110), and (113) diffraction peaks assigned to hexagonal R-3m (No. 166) which were observed in each sample, profile fitting was conducted and the integrated intensities, integrated-intensity ratios, etc. were calculated. For calculating half-value width and area, use was made of a diffraction pattern obtained through a measurement made by the focusing method in the fixed-slit mode. The half-value width was calculated using the following equation.

$$(\text{Half-value width assigned to the sample})^2 = (\text{half-value width from data obtained by examining the sample})^2 - (\text{half-value width from data obtained by examining standard Si})^2$$

For correcting the half-value width, use was made of the data obtained by examining standard Si sample "NIST640b".

- Actual XRD examinations (Examples and Comparative Examples) were made in the variable-slit mode, and data conversions from the variable to the fixed mode were performed.
- The conversions from the variable to the fixed mode were made in accordance with the calculation formula [Intensity (fixed)]=[intensity (variable)]/sinθ.

(Specifications of X-ray Powder Diffractometer)

Apparatus name: X'Pert Pro MPD, manufactured by Analytical B.V, Holland
Optics: focusing optics

(Specifications of the Optics)

Incidence side: enclosed X-ray tube (CuKα)

Soller Slit (0.04 rad)
Divergence Slit (variable slit)

Sample stage: rotating sample state (SPinner)
Receiving side: semiconductor array detector (X'Celerator)

Ni-filter

Goniometer radius: 243 mm

(Measurement Conditions)

X-ray output (CuK$\alpha$): 40 kV, 30 mA
Scan axis: $\theta/2\theta$
Scan range ($2\theta$): 10.0-75.0°
Measurement mode: continuous
Step interval: 0.015°
Counting time: 99.7 sec
Automatic variable slit (Automatic-DS: 10 mm (irradiation width))
Lateral divergence mask: 10 mm (irradiation width)

<Median Diameter of Secondary Particles>

The median diameter was determined on a volume basis through a measurement made with a known laser diffraction/scattering type particle size distribution analyzer while setting the refractive index at 1.60. For the measurement, a 0.1% by weight aqueous solution of sodium hexametaphosphate was used as a dispersion medium.

<Average Primary-particle Diameter>

The diameter was determined from an SEM image having a magnification of 10,000 diameters.

<Determination of various Properties by Mercury Intrusion Method>

As a device for a measurement by the method of mercury intrusion, use was made of AutoPore III Type 9450, manufactured by Micromeritics Corp. With respect to conditions for the measurement by the method of mercury intrusion, the measurement was made while elevating the pressure from 3.86 kPa to 413 MPa at room temperature. Incidentally, 480 dyn/cm and 141.3° were used as the value of surface tension of mercury and as the value of contact angle, respectively.

<Bulk Density>

Ten grams of a powder sample was placed in a 10-mL measuring cylinder made of glass and this measuring cylinder was tapped 200 times at a stroke of about 20 mm. The density of this densified powder was determined as the bulk density.

<Specific Surface Area>

Specific surface area was determined by the BET method.

<Median Diameter of Pulverized Particles in Slurry>

The median diameter was determined on a volume basis by means of a known laser diffraction/scattering type particle size distribution analyzer while setting the refractive index at 1.24. A 0.1% by weight aqueous solution of sodium hexametaphosphate was used as a dispersion medium for the measurement, and the particle diameters were measured after the dispersion had undergone a 5-minute ultrasonic dispersion treatment (output, 30 W; frequency, 22.5 kHz).

[Production of Lithium-Transition Metal Compound Powders (Examples and Comparative Examples)]

(EXAMPLE 1)

$Li_2CO_3$, $Ni(OH)_2$, $Mn_3O_4$, and $CoOOH$ were weighed out so as to result in a Li:Ni:Mn:Co molar ratio of 1.10: 0.333:0.333:0.333, and polyphosphoric acid was weighed out so that the amount thereof was 1.6% by mole of the total weight of those starting materials. The ingredients were mixed together. Thereafter, pure water was added thereto to prepare a slurry. A circulating wet pulverizer of the dispersing medium agitation type was used to pulverize the solid components of the slurry to a median diameter of 0.20 $\mu$m while stirring the slurry.

Subsequently, this slurry (solid content, 22% by weight; viscosity, 1,920 cP) was spray-dried using a two-fluid-nozzle type spray dryer (Type LT-8, manufactured by Ohkawara Kakohki Co, Ltd.). Air was used as a drying gas for the spray drying, which was conducted at a drying-gas feed rate G of 45 L/min and a slurry feed rate S of $6\times10^{-3}$ L/min (gas-liquid ratio G/S = 7,500). The dryer inlet temperature was set at 150°C. About 15 g of the particulate powder obtained by the spray drying with the spray dryer was charged into a crucible made of alumina, subsequently burned at 1,000°C for 6 hours (heating rate, 3.3 °C/min) in an air atmosphere, and then disaggregated. Thus, a lithium-nickel-manganese-cobalt composite oxide having a lamellar structure and having the composition $Li_{1.10}(Ni_{0.333}Mn_{0.333}C_{00.333})O_2$ was obtained. This composite oxide had an average primary-particle diameter of 0.7 $\mu$m, a median diameter of 6.1 $\mu$m, a 90% cumulative diameter ($D_{90}$) of 10.0 $\mu$m, a bulk density of 1.7 g/cc, and a BET specific surface area of 1.1 $m^2$/g.

When examined by X-ray powder diffractometry using a CuK$\alpha$ ray, the composite oxide showed a diffraction peak at a diffraction angle 2$\theta$ of about 64.5°, and the diffraction peak had a half-value width FWHM of 0.040. Furthermore, the composite oxide was examined for surface concentration of P by XPS, and the concentration of P in the whole composite oxide was calculated from the composition of the feed materials. The concentration values thus obtained were compared. As a result, the surface concentration of P was found to be 4.0 times.

(EXAMPLE 2)

$Li_2CO_3$, $NiCO_3$, $Mn_3O_4$, $CoOOH$, $WO_3$, and $Li_3PO_4$ were weighed out so as to result in a Li:Ni:Mn:Co:W:P molar ratio of 1.12:0.45:0.45:0.10:0.015:0.005, and the ingredients were mixed together. Thereafter, pure water was added thereto to prepare a slurry. A circulating wet pulverizer of the dispersing medium agitation type was used to pulverize the solid components of the slurry to a median diameter of 0.50 $\mu$m while stirring the slurry.

Subsequently, this slurry (solid content, 38% by weight; viscosity, 1,100 cP) was spray-dried using a two-fluid-nozzle type spray dryer (Type LT-8, manufactured by Ohkawara Kakohki Co, Ltd.). Air was used as a drying gas for the spray drying, which was conducted at a drying-gas feed rate G of 45 L/min and a slurry feed rate S of $6\times10^{-3}$ L/min (gas-liquid ratio G/S = 7,500). The dryer inlet temperature was set at 150°C. The particulate powder obtained by the spray drying with the spray dryer was charged into a crucible made of alumina, subsequently burned in an air atmosphere first at 650°C for 2 hours (heating rate, 15 °C/min) and then at 1,125°C for 1 hour (heating rate, 15 °C/min; cooling rate, 10 °C/min), and thereafter disaggregated. Thus, a lithium-nickel-manganese-cobalt composite oxide having a lamellar structure and having the composition $Li_{1.12}(Ni_{0.45}Mn_{0.45}Co_{0.10})O_2$ was obtained. This composite oxide had an average primary-particle diameter of 0.5 $\mu$m, a median diameter of 8.6 $\mu$m, a 90% cumulative diameter ($D_{90}$) of 16.6 $\mu$m, a bulk density of 1.6 g/cc, and a BET specific surface area of 1.1 $m^2$/g.

When examined by X-ray powder diffractometry using a CuK$\alpha$ ray, the composite oxide showed a diffraction peak at a diffraction angle 2$\theta$ of about 64.5°, and the diffraction peak had a half-value width FWHM of 0.119. Furthermore, the composite oxide was examined for surface concentration of P by XPS, and the concentration of P in the whole composite oxide was calculated from the composition of the feed materials. The concentration values thus obtained were compared. As a result, the surface concentration of P was found to be 2.4 times.

(EXAMPLE 3)

$Li_2CO_3$, $NiCO_3$, $Mn_3O_4$, $CoOOH$, $WO_3$, and $Li_2SiO_3$ were weighed out so as to result in a Li:Ni:Mn:Co.W:Si molar ratio of 1.12:0.45:0.45:0.10:0.015:0.005, and the ingredients were mixed together. Thereafter, pure water was added thereto to prepare a slurry. A circulating wet pulverizer of the dispersing medium agitation type was used to pulverize the solid components of the slurry to a median diameter of 0.50 $\mu$m while stirring the slurry.

Subsequently, this slurry (solid content, 38% by weight; viscosity, 1,440 cP) was spray-dried using a two-fluid-nozzle type spray dryer (Type LT-8, manufactured by Ohkawara Kakohki Co, Ltd.). Air was used as a drying gas for the spray drying, which was conducted at a drying-gas feed rate G of 45 L/min and a slurry feed rate S of $6\times10^{-3}$ L/min (gas-liquid ratio G/S = 7,500). The dryer inlet temperature was set at 150°C. The particulate powder obtained by the spray drying with the spray dryer was charged into a crucible made of alumina, subsequently burned in an air atmosphere first at 650°C for 2 hours (heating rate, 15 °C/min) and then at 1,125°C for 1 hour (heating rate, 15 °C/min; cooling rate, 10 °C/min), and thereafter disaggregated. Thus, a lithium-nickel-manganese-cobalt composite oxide having a lamellar structure and having the composition $Li_{1.12}(Ni_{0.45}Mn_{0.45}Co_{0.10})O_2$ was obtained. This composite oxide had an average primary-particle diameter of 0.5 $\mu$m, a median diameter of 7.1 $\mu$m, a 90% cumulative diameter ($D_{90}$) of 11.5 $\mu$m, a bulk density of 1.6 g/cc, and a BET specific surface area of 1.2 m$^2$/g.

When examined by X-ray powder diffractometry using a CuK$\alpha$ ray, the composite oxide showed a diffraction peak at a diffraction angle 2$\theta$ of about 64.5°, and the diffraction peak had a half-value width FWHM of 0.116. Furthermore, the composite oxide was examined for surface concentration of P by XPS, and the concentration of P in the whole composite oxide was calculated from the composition of the feed materials. The concentration values thus obtained were compared. As a result, the surface concentration of P was found to be 12.6 times.

(COMPARATIVE EXAMPLE 1)

$Li_2CO_3$, $Ni(OH)_2$, $Mn_3O_4$, and CoOOH were weighed out so as to result in a Li:Ni:Mn:Co molar ratio of 1.095: 0.333:0.333:0.333, and the ingredients were mixed together. Thereafter, pure water was added thereto to prepare a slurry. A circulating wet pulverizer of the dispersing medium agitation type was used to pulverize the solid components of the slurry to a median diameter of 0.33 $\mu$m while stirring the slurry.

Subsequently, this slurry (solid content, 18% by weight; viscosity, 1,020 cP) was spray-dried using a two-fluid-nozzle type spray dryer (Type LT-8, manufactured by Ohkawara Kakohki Co, Ltd.). Air was used as a drying gas for the spray drying, which was conducted at a drying-gas feed rate G of 30 L/min and a slurry feed rate S of $36 \times 10^{-3}$ /min (gas-liquid ratio G/S = 833). The dryer inlet temperature was set at 150°C. About 15 g of the particulate powder obtained by the spray drying with the spray dryer was charged into a crucible made of alumina, subsequently burned at 1,000°C for 6 hours (heating rate, 3.3 °C/min) in an air atmosphere, and then disaggregated. Thus, a lithium-nickel-manganese-cobalt composite oxide having a lamellar structure and having the composition $Li_{1.095}(Ni_{0.333}Mn_{0.333}CO_{0.333})O_2$ was obtained. This composite oxide had an average primary-particle diameter of 1.0 $\mu$m, a median diameter of 9.0 $\mu$m, a 90% cumulative diameter ($D_{90}$) of 15.3 $\mu$m, a bulk density of 1.6 g/cc, and a BET specific surface area of 0.9 m$^2$/g.

When examined by X-ray powder diffractometry using a CuK$\alpha$ ray, the composite oxide showed a diffraction peak at a diffraction angle 2$\theta$ of about 64.5°, and the diffraction peak had a half-value width FWHM of 0.051.

(COMPARATIVE EXAMPLE 2)

$Li_2CO_3$, $NiCO_3$, $Mn_3O_4$, CoOOH, and $WO_3$ were weighed out so as to result in a Li:Ni:Mn:Co:W molar ratio of 1.12:0.45:0.45:0.10:0.015, and the ingredients were mixed together. Thereafter, pure water was added thereto to prepare a slurry. A circulating wet pulverizer of the dispersing medium agitation type was used to pulverize the solid components of the slurry to a median diameter of 0.50 $\mu$m while stirring the slurry.

Subsequently, this slurry (solid content, 38% by weight; viscosity, 1,100 cP) was spray-dried using a two-fluid-nozzle type spray dryer (Type LT-8, manufactured by Ohkawara Kakohki Co, Ltd.). Air was used as a drying gas for the spray drying, which was conducted at a drying-gas feed rate G of 45 L/min and a slurry feed rate S of $6 \times 10^{-3}$ L/min (gas-liquid ratio G/S = 7,500). The dryer inlet temperature was set at 150°C. The particulate powder obtained by the spray drying with the spray dryer was charged into a crucible made of alumina, subsequently burned at 1,050°C for 1 hour (heating rate, 15 °C/min; cooling rate, 10 °C/min) in an air atmosphere, and then disaggregated. Thus, a lithium-nickel-manganese-cobalt composite oxide having a lamellar structure and having the composition $Lit_{1.12}(Ni_{0.45}Mn_{0.45}Co_{0.10})O_2$ was obtained. This composite oxide had an average primary-particle diameter of 0.3 $\mu$m, a median diameter of 9.4 $\mu$m, a 90% cumulative diameter ($D_{90}$) of 16.3 $\mu$m, a bulk density of 1.0 g/cc, and a BET specific surface area of 2.1 m$^2$/g.

When examined by X-ray powder diffractometry using a CuK$\alpha$ ray, the composite oxide showed a diffraction peak at a diffraction angle 2$\theta$ of about 64.5°, and the diffraction peak had a half-value width FWHM of 0.155.

(COMPARATIVE EXAMPLE 3)

$NiCO_3$ and CoOOH were weighed out so as to result in a Ni:Co molar ratio of 0.90:0.10, and the ingredients were mixed together. Thereafter, pure water was added thereto to prepare a slurry. A circulating wet pulverizer of the dispersing medium agitation type was used to pulverize the solid components of the slurry to a median diameter of 0.50 $\mu$m while stirring the slurry.

Subsequently, this slurry (solid content, 38% by weight; viscosity, 1,100 cP) was spray-dried using a two-fluid-nozzle type spray dryer (Type LT-8, manufactured by Ohkawara Kakohki Co, Ltd.). Air was used as a drying gas for the spray drying, which was conducted at a drying-gas feed rate G of 45 L/min and a slurry feed rate S of $6 \times 10^{-3}$ L/min (gas-liquid ratio G/S = 7,500). The dryer inlet temperature was set at 150°C. The particulate powder obtained by the spray drying with the spray dryer and an LiOH powder where mixed so as to result in a Ni:Co:Li molar ratio of 0.90:0.10:

1.00, and the mixture was charged into a crucible made of alumina, subsequently burned at 750°C for 20 hours (heating rate, 3.33 °C/min) in an air stream, and then disaggregated. Thus, a lithium-nickel-cobalt composite oxide having a lamellar structure and having the composition $Li_{1.00}(Ni_{0.9}Co_{0.10})O_2$ was obtained. This composite oxide had an average primary-particle diameter of 0.3 $\mu$m, a median diameter of 10.8 $\mu$m, a 90% cumulative diameter ($D_{90}$) of 26.7 $\mu$m, a bulk density of 2.2 g/cc, and a BET specific surface area of 2.5 m$^2$/g.

When examined by X-ray powder diffractometry using a Cub$\alpha$ ray, the composite oxide showed a diffraction peak at a diffraction angle 2$\theta$ of about 64.5°, and the diffraction peak had a half-value width FWHM of 0.178.

(COMPARATIVE EXAMPLE 4)

$NiCO_3$, CoOOH, and $H_3PO_4$ were weighed out so as to result in a Ni:Co:P molar ratio of 0.90:0.10:0.02, and the ingredients were mixed together. Thereafter, pure water was added thereto to prepare a slurry. A circulating wet pulverizer of the dispersing medium agitation type was used to pulverize the solid components of the slurry to a median diameter of 0.50 $\mu$m while stirring the slurry.

Subsequently, this slurry (solid content, 38% by weight; viscosity, 1,100 cP) was spray-dried using a two-fluid-nozzle type spray dryer (Type LT-8, manufactured by Ohkawara Kakohki Co, Ltd.). Air was used as a drying gas for the spray drying, which was conducted at a drying-gas feed rate G of 45 L/min and a slurry feed rate S of $6 \times 10^{-3}$ L/min (gas-liquid ratio G/S = 7,500). The dryer inlet temperature was set at 150°C. The particulate powder obtained by the spray drying with the spray dryer and an LiOH powder were mixed so as to result in a Ni:Co:Li molar ratio of 0.90:0.10: 1.00, and the mixture was charged into a crucible made of alumina, subsequently burned at 750°C for 20 hours (heating rate, 3.33 °C/min) in an air stream, and then disaggregated. Thus, a lithium-nickel-cobalt composite oxide having a lamellar structure and having the composition $Li_{1.00}(Ni_{0.9}Co_{0.10})O_2$ was obtained. This composite oxide had an average primary-particle diameter of 0.4 $\mu$m, a median diameter of 13.9 $\mu$m, a 90% cumulative diameter ($D_{90}$) of 38.3 $\mu$m, a bulk density of 2.3 g/cc, and a BET specific surface area of 2.3 m$^2$/g.

When examined by X-ray powder diffractometry using a Cub$\alpha$ ray, the composite oxide showed a diffraction peak at a diffraction angle 2$\theta$ of about 64.5°, and the diffraction peak had a half-value width FWHM of 0.185. Furthermore, the composite oxide was examined for surface concentration of P by XPS, and the concentration of P in the whole composite oxide was calculated from the composition of the feed materials. The concentration values thus obtained were compared. As a result, the surface concentration of was found to be 3.2 times.

The values of the properties of the lithium-transition metal compound powders produced in the Examples and Comparative Examples given above are shown in Table 1. In accordance with criteria, a powder was rated as acceptable when the powder had a bulk density of 1.2 g/cc or higher and gave a pore distribution curve which had a peak at 80-800 nm (pore radius), excluding 800 nm.

[Table 1]

Table 1. Property values of the lithium-transition metal compound powders produced in Examples and Comparative Examples

| Positive electrode material | | Mercury intrusion amount[1] (mL/g) | Pore radius (nm) | | Partial pore volume (mL/g) | | Average primary-particle diameter | Median diameter | 90% cumulative diameter | Bulk density | BET specific surface area | Evaluation |
|---|---|---|---|---|---|---|---|---|---|---|---|---|
| | | | Peak top 1[2] | Peak top 2[3] | Peak top 1 | Peak top 2 | $(\mu m)$ | $(\mu m)$ | $\{D_{90}\}(\mu m)$ | $(g/cm^3)$ | $(m^2/g)$ | |
| Examples | 1 | 0.54 | 260 | 1300 | 0.05 | 0.30 | 0.7 | 6.1 | 10.0 | 1.7 | 1.1 | acceptable |
| | 2 | 0.64 | 500 | 1500 | 0.08 | 0.34 | 0.5 | 8.6 | 16.6 | 1.6 | 1.1 | acceptable |
| | 3 | 0.65 | 500 | 1300 | 0.06 | 0.35 | 0.5 | 7.1 | 11.5 | 1.6 | 1.2 | acceptable |
| Comparative Example | 1 | 0.70 | 500 | 2000 | 0.11 | 0.35 | 1.0 | 9.0 | 15.3 | 1.6 | 0.9 | acceptable |
| | 2 | 1.20 | 410 | 1300 | 0.23 | 0.53 | 0.3 | 9.4 | 16.3 | 1.0 | 2.1 | unacceptable |
| | 3 | 0.41 | - | 1000 | - | 0.28 | 0.3 | 10.8 | 26.7 | 2.2 | 2.5 | unacceptable |
| | 4 | 0.37 | - | 1900 | - | 0.25 | 0.4 | 13.9 | 38.3 | 2.3 | 2.3 | unacceptable |

1) Amount of mercury intruded during pressure rising from 3.86 kPa to 413 MPa in measurement by mercury intrusion method.
2) With respect to the peak appearing at 80-800 nm (pore radius), excluding 800 nm, in pore distribution curve.
3) With respect to the peak appearing at 800 nm or larger (pore radius) in pore distribution curve.

It can be seen from Table 1 that the lithium-nickel-manganese-cobalt composite oxide powders produced in the Examples are lower in mercury intrusion amount than in some of the Comparative Examples and have smaller voids among the active-material particles and a high bulk density. On the other hand, the powders produced in Comparative Examples 3 and 4, in which Examples given in known document 6 were followed, had a high bulk density but gave a pore distribution curve in which the peak that should appear in the range of 80 nm to 800 mn, excluding 800 nm, was not observed.

The FWHM of the peak in each of the lithium-transition metal compound powders produced in the Examples and Comparative Examples and the degree of surface concentration of the additive element therein are shown in Table 2.

[Table 2]

Table 2. FWHM of peak present at diffraction angle $2\theta$ of about 64.5° in examination by X-ray diffractometry of the lithium-transition metal compound powders produced in Examples and Comparative Examples, and the degree of concentration therein

| Positive-electrode material | | FWHM of peak [°] | Degree of concentration of additive element in surface of positive-electrode active material | Evaluation |
|---|---|---|---|---|
| Example | 1 | 0.040 | 1.1 | acceptable |
| | 2 | 0.119 | 2.4 | acceptable |
| | 3 | 0.116 | 12.6 | acceptable |
| Comparative Example | 1 | 0.051 | - | acceptable |
| | 2 | 0.155 | - | acceptable |
| | 3 | 0.178 | - | acceptable |
| | 4 | 0.185 | 3.2 | acceptable |

Table 2 shows that the additive has concentrated in the surface of each lithium-transition metal compound powder. However, due to the presence of pores at 80-800 nm, excluding 800 nm, in the pore distribution curve of the powder, primary particles of a compound having the additive element of the invention are present also in an inner part of the powder particles, as apparent from the results of an examination of a cross-section of the particles with an SEM.

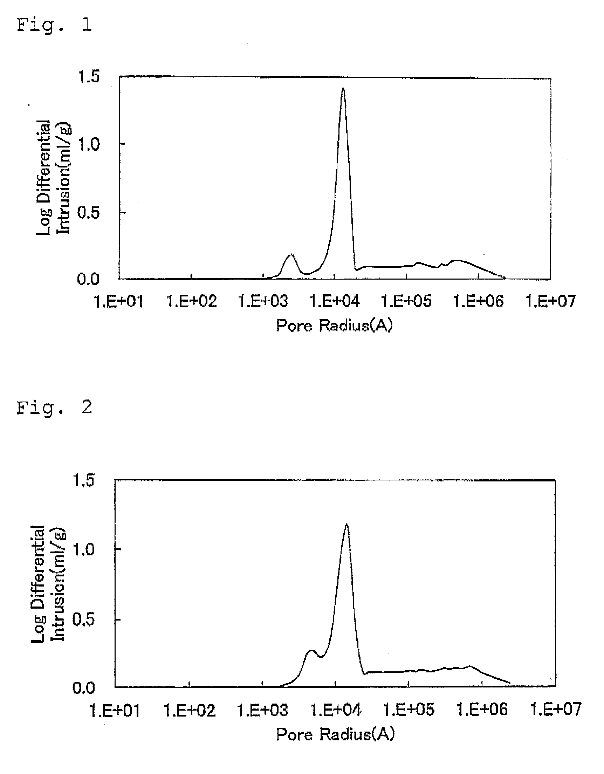

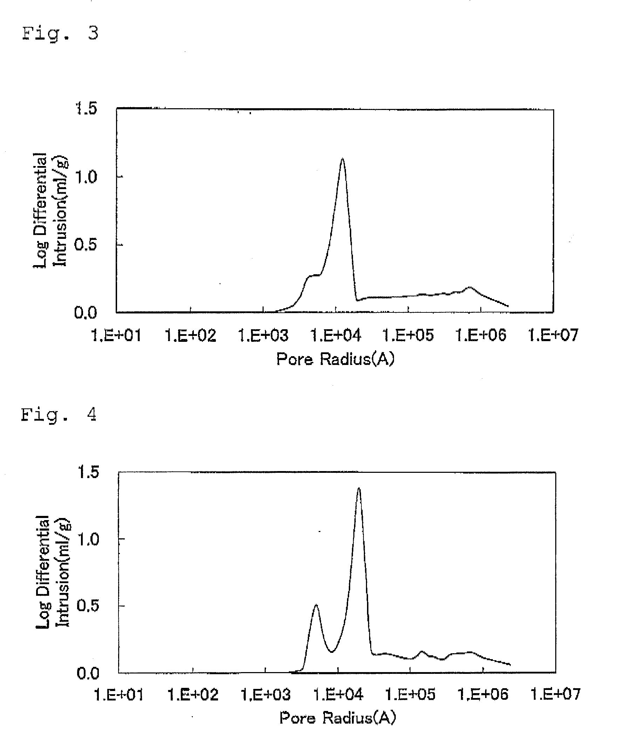

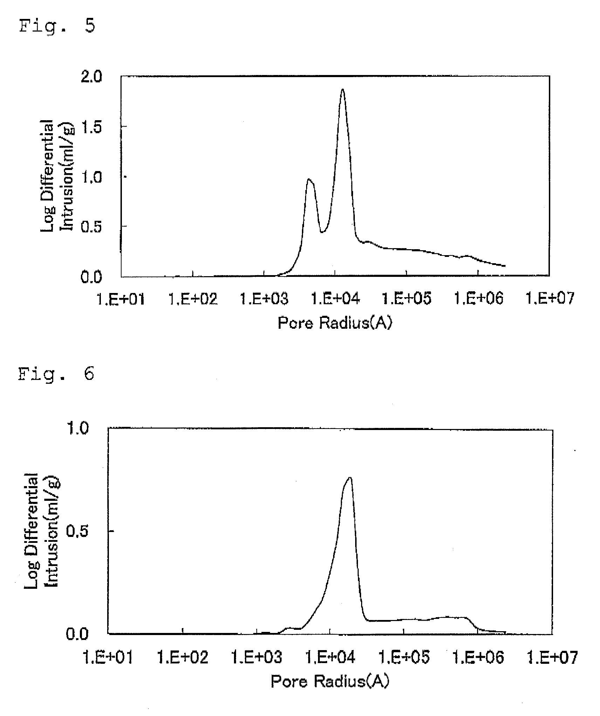

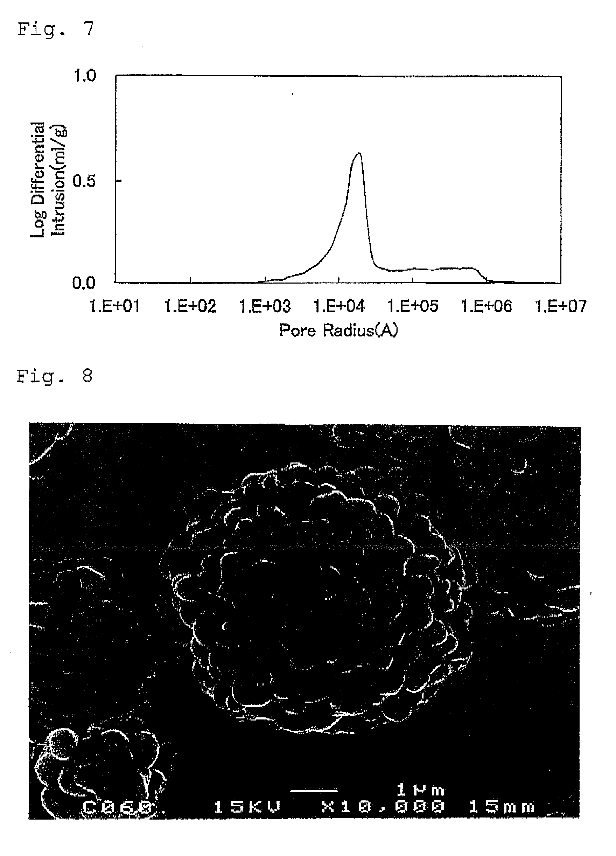

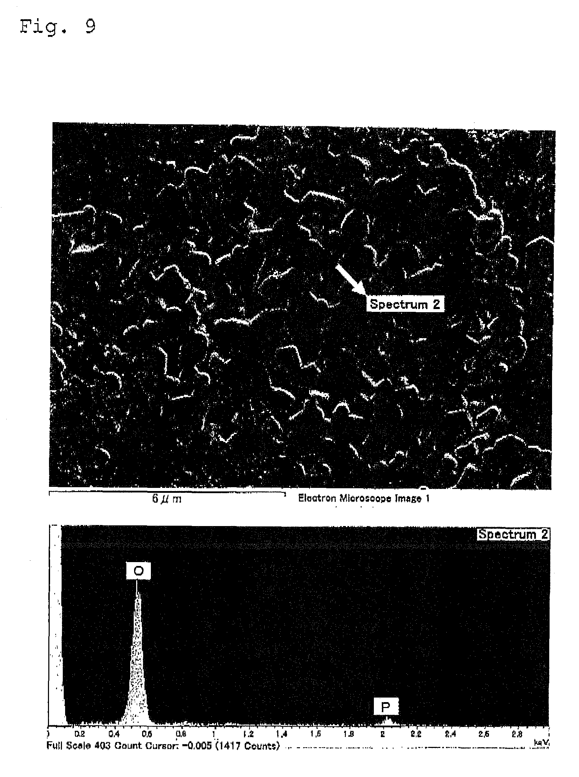

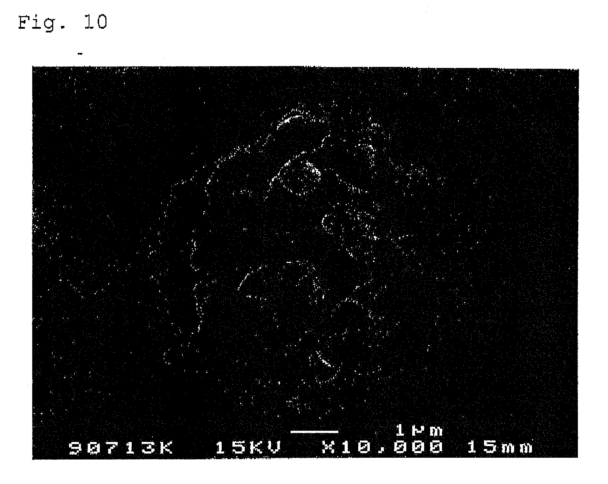

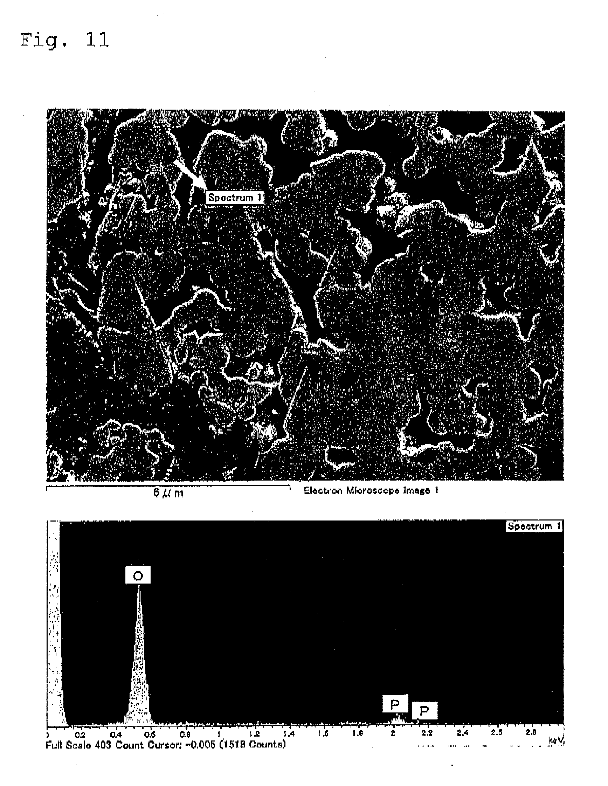

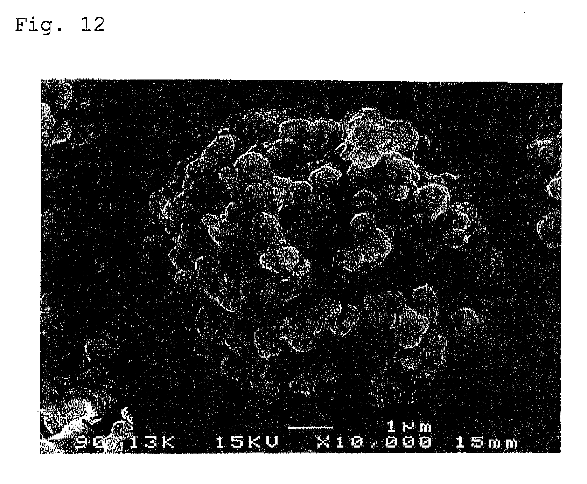

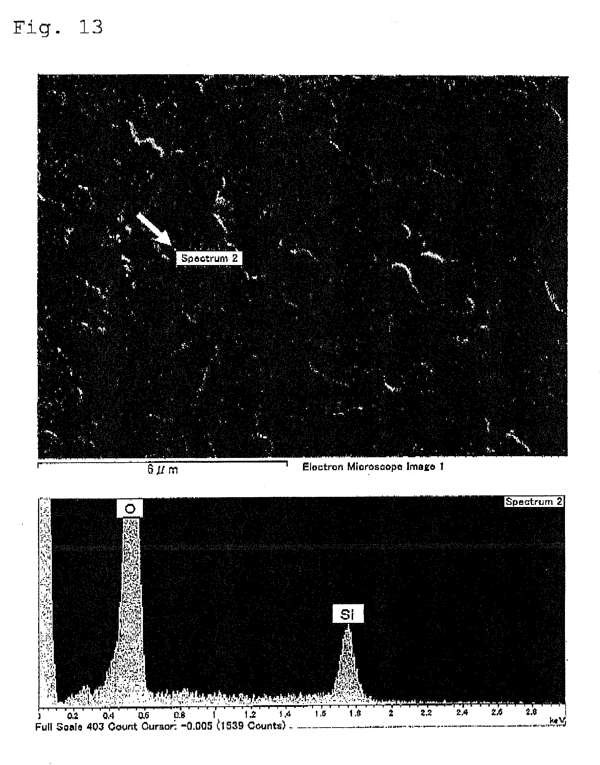

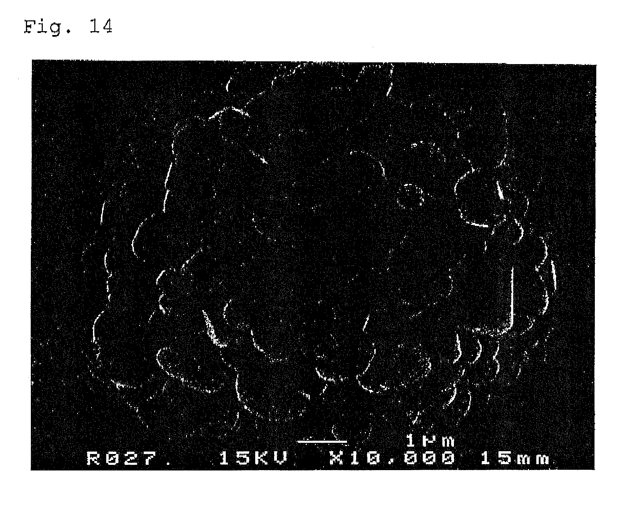

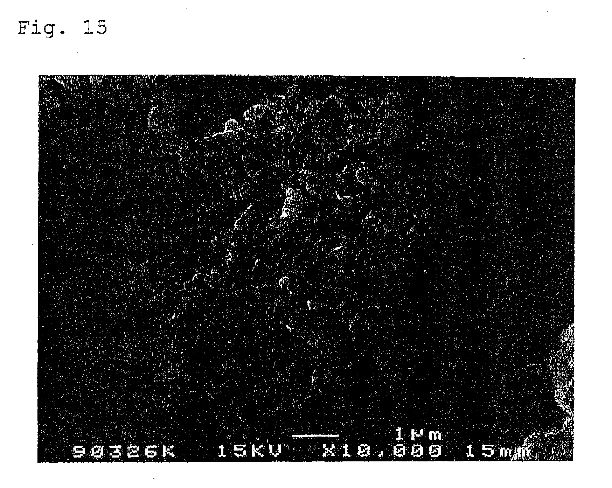

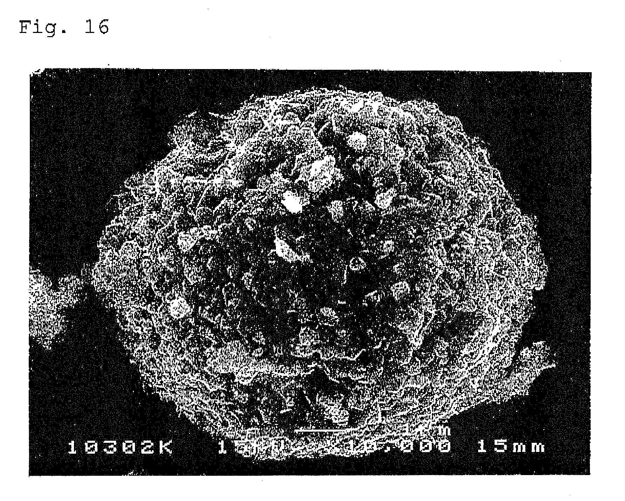

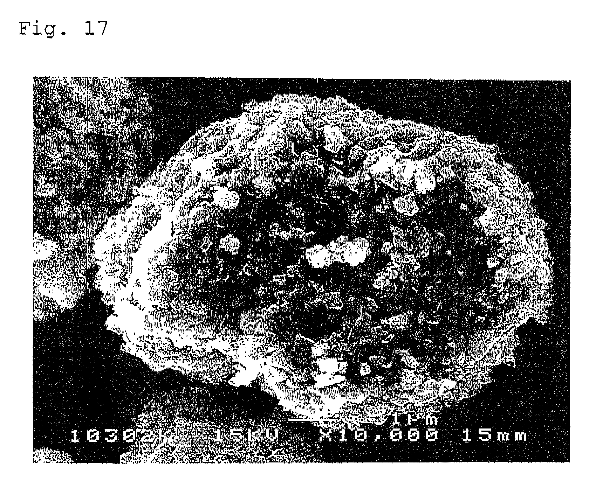

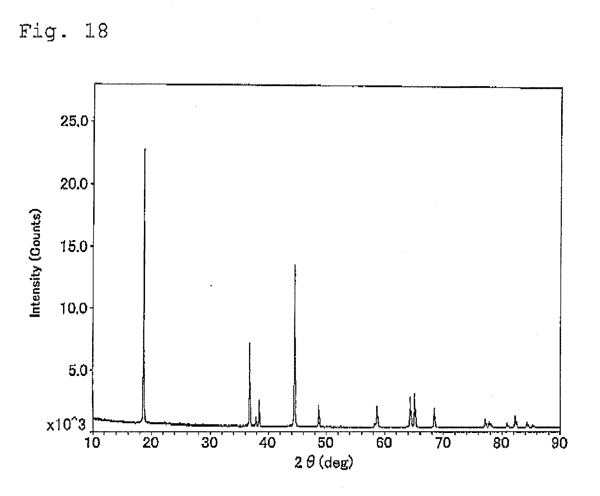

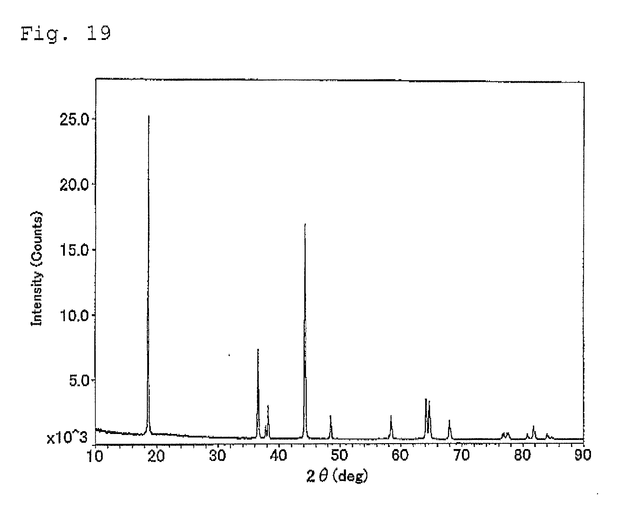

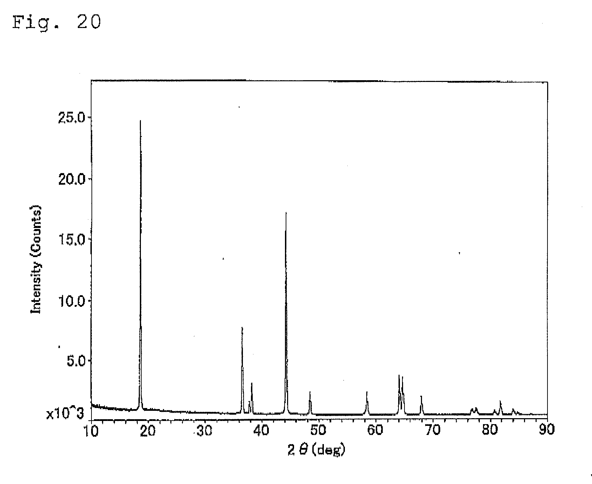

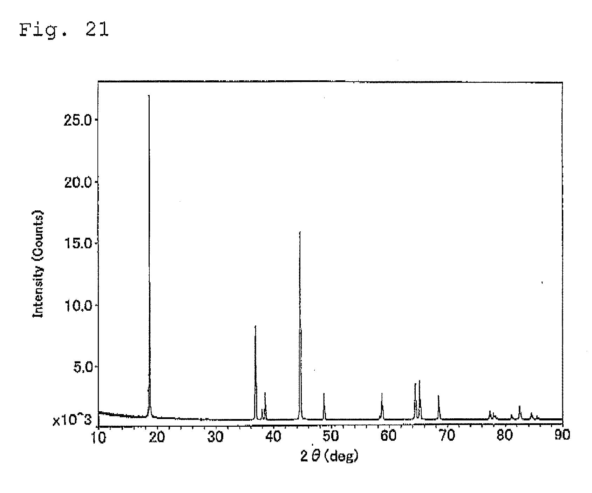

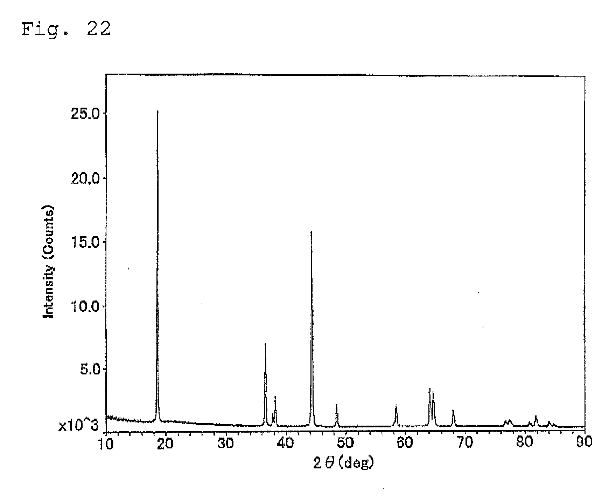

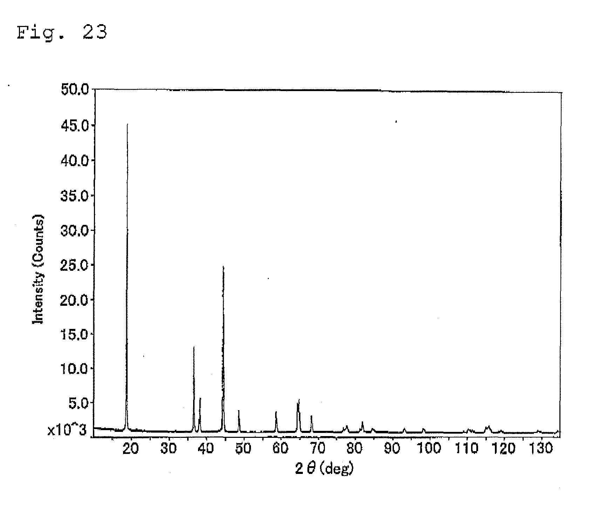

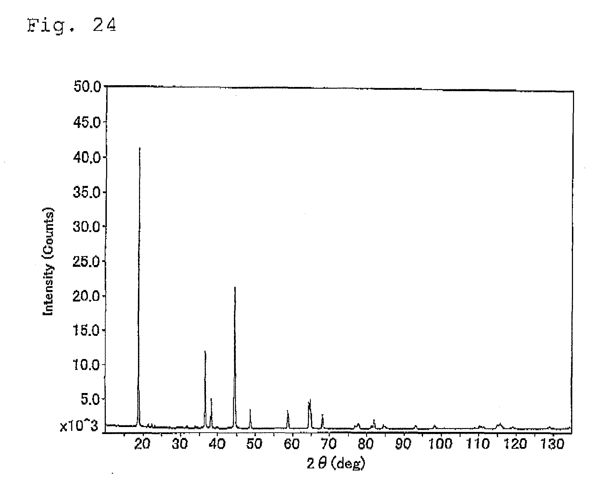

The pore distribution curves of the lithium-nickel-manganese cobalt composite oxide powders produced in the Examples and Comparative Examples are shown in Fig. 1 to Fig. 7, respectively, and SEM images (photographs) (magnification, ×10,000) thereof are shown in Figs. 8 to 17. Furthermore, the X-ray powder diffraction peaks thereof are shown in Figs. 18 to 24, respectively.

[Production and Evaluation of Batteries]

Each of the lithium-transition metal compound powders produced in the Examples and Comparative Examples given above was used as a positive-electrode material (positive-electrode active material) to produce lithium secondary batteries by the following methods. The batteries produced were evaluated in the following manners.

(1) Rate Test:

The mixed or unmixed powder produced in each of the Examples and Comparative Examples, acetylene black, and a polytetrafluoroethylene powder were weighed out in proportions of 75% by weight, 20% by weight, and 5% by weight, respectively, and sufficiently mixed by means of a mortar. This mixture was formed into a thin sheet, and a disk was punched out of the sheet with a punch having a diameter of 9 mm. In this operation, the sheet was regulated so that the disk as a whole weighed about 8 mg. This disk was press-bonded to an expanded metal of aluminum to obtain a positive electrode having a diameter of 9 mm.

Using this positive electrode having a diameter of 9 mm and a lithium metal plate as a test electrode and a counter electrode, respectively, and further using an electrolytic solution prepared by dissolving $LiPF_6$ in a concentration of 1 mol/L in a solvent composed of EC (ethylene carbonate), DMC (dimethyl carbonate), and EMC (ethyl methyl carbonate) in an EC:DMC:EMC ratio of 3:3:4 (by volume), a coin cell was fabricated in which a porous polyethylene film having a thickness of 25 $\mu$m was used as a separator.

The coin cell obtained was subjected to a test including: a first cycle in which the cell was subjected to constant-current constant-voltage charge at 0.2 mA/cm$^2$ to an upper-limit voltage of 4.6 V and then to constant-current discharge at 0.2 mA/cm$^2$ to a lower-limit voltage of 3.0 V; a second cycle in which the cell was subjected to constant-current constant-voltage charge at 0.5 mA/cm$^2$ to an upper-limit voltage of 4.6 V and then to constant-current discharge at 0.2 mA/cm$^2$ to a lower-limit voltage of 3.0 V; and a subsequent third cycle in which the cell was subjected to constant-current charge at 0.5 mA/cm$^2$ and then to constant-current discharge at 11 mA/cm$^2$.

(2) Low-temperature Load Characteristics Test and High-temperature Cycle Test:

The mixed or unmixed powder produced in each of the Examples and Comparative Example, acetylene black, and a polytetrafluoroethylene powder were weighed out in proportions of 75% by weight, 20% by weight, and 5% by weight, respectively, and sufficiently mixed by means of a mortar. This mixture was formed into a thin sheet, and a disk was punched out of the sheet with a punch having a diameter of 12 mm. In this operation, the sheet was regulated so that the disk as a whole weighed about 18 mg. This disk was press-bonded to an expanded metal of aluminum to obtain a positive electrode having a diameter of 12 mm.

Using the results of the first-cycle charge/discharge in the rate test (1), the initial charge capacity Qs(C) [mAh/g] and initial discharge capacity Qs(D) [mAh/g] per unit weight of the positive-electrode active material were determined. A graphite powder ($d_{002}$=3.35 A) having an average particle diameter of 8-10 $\mu$m and poly(vinylidene fluoride) were used as a negative-electrode active material and a binder, respectively. These materials were weighed out in a ratio of 92.5:7.5 by weight and mixed together in an N-methylpyrrolidone solution to obtain a negative-electrode mix slurry. This slurry was applied to one surface of a copper foil having a thickness of 20 $\mu$m and dried to vaporize the solvent Thereafter, a disk having a diameter of 12 mm was punched out of the coated foil and then pressed at 0.5 ton/cm$^2$ (49 MPa) to obtain a negative electrode. In the operation, the amount of the negative-electrode active material present of the electrode was regulated to about 5-12 mg.

A cell was fabricated using the negative electrode as a test electrode and using lithium metal as a counter electrode. This cell was subjected to a test in which the negative electrode was caused to occlude lithium ions at a constant current of 0.2 mA/cm$^2$ and a constant voltage of 3 mV (cutoff current, 0.05 mA) to a lower-limit voltage of 0 V. Through this test, the initial occlusion capacity Qf [mAh/g] per unit weight of the negative-electrode active material was determined.

The positive electrode and the negative electrode were used in combination, and coin-cell cans were used to fabricate a test cell, which was evaluated for battery performances. Namely, the positive electrode produced was placed on a positive-electrode coin-cell can, and a porous polyethylene film having a thickness of 25 $\mu$m was placed thereon as a separator. The stack was held in place by a gasket made of polypropylene. Thereafter, an electrolytic solution prepaid by dissolving LiPF$_6$ in a concentration of 1 mol/L in a solvent composed of EC (ethylene carbonate), DMC (dimethyl carbonate), and EMC (ethyl methyl carbonate) in an EC:DMC:EMC ratio of 3:3:4 (by volume) was used as a nonaqueous electrolytic solution and introduced into the can to sufficiently infiltrate the electrolytic solution into the separator. Subsequently, the negative electrode was placed, and a negative-electrode can was placed thereon. The resultant assembly was sealed to produce a coin type lithium secondary battery. In this battery production, the proportions of the weight of the positive-electrode active material and the weight of the negative-electrode active material were set so that the following equation was substantially satisfied.

$$\text{(Weight of positive-electrode active material [g])/(weight of negative-electrode active material [g])}$$
$$= (Qf \, [mAh/g]/1.2)Qs(C) \, [mAh/g]$$

In order to determine the low-temperature load characteristics of the battery thus obtained, the 1-hour-rate current value, i.e., 1 C, of the battery was set as shown below and the following test was conducted.

$$1 \, C \, [mA] = Qs(D) \times \text{(weight of positive-electrode active material [g])/(period [h])}$$

First, at room temperature, two cycles of charge/discharge at a constant current of 0.2 C and one cycle of charge/discharge at a constant current of 1 C were conducted. The upper-limit charge voltage was set at 4.1 V or 4.5 V, and the lower-limit voltage was set at 3.0 V. Subsequently, the coin cell regulated so as to have a state of charge of 40% by 1/3 C constant-current charge/discharge was held in a low-temperature atmosphere of -30°C for 1, hour or longer and then discharged at a constant current of 0.5 C [mA] for 10 seconds. The voltage of the cell as measured after the 10-second discharge and the voltage thereof before the discharge were expressed by V [mV] and $V_0$ [mV], respectively, and the resistance R [Ω] was calculated from $\Delta V=V-V_0$ using the following equation.

$$R\ [\Omega] = \Delta V\ [mV]/0.5\ C\ [mA]$$

Next, at a high temperature of 60°C, a test was conducted in which one cycle of charge/discharge at a constant current of 0.2 C and subsequent 100 cycles of charge/discharge at a constant current of 1 C were performed. The upper-limit charge voltage was set at 4.1 V or 4.5 V, and the lower-limit voltage was set at 3.0 V. The proportion of the discharge capacity Qh(100) measured in the 100th charge/discharge cycle conducted at 60°C and 1 C in the test was calculated, using the following equation, as high-temperature cycle capacity retention (cycle retention) P. The high-temperature characteristics of batteries were compared on the basis of the value of P.

$$P\ [\%] = \{Qh(100)/Qh(1)\}\times100$$

Subsequently, the resistance R [Ω] after the high-temperature cycle test was calculated in the same manner as described above.

In Table 3 are shown the first-cycle initial discharge capacity and third-cycle high-rate discharge capacity of each of the batteries employing the mixed or unmixed powders obtained in the Examples and Comparative Examples and the low-temperature resistance and 60°C cycle retention of each of the batteries employing the positive-electrode active materials for lithium secondary batteries obtained in the Examples and Comparative Examples. The lower the resistance, the better the low-temperature load characteristics. The higher the retention, the better the high-temperature cycle characteristics. In accordance with the criteria set for the Example, a battery was rated as acceptable when the battery had an initial discharge capacity of 190 mAh/g or higher, a third-cycle discharge capacity of 140 mAh/g or higher, a low-temperature resistance before cycling of 500 Ω or less, and a cycle retention of 80% or higher.

[Table 3]

Table 3. Battery characteristics of the lithium-transition metal compound powders produced in Examples and Comparative Examples

| Positive-electrode material | | First-cycle discharge capacity (mAh/g)/ 3.0-4.6V, 0.2 mA/cm² | Third-cycle discharge capacity [a] (mAh/g)/ 3.0-4.6V, 11 mA/cm² | Low-temperature resistance (Ω) | | Cycle capacity retention (%) | Evaluation |
|---|---|---|---|---|---|---|---|
| | | | | Before cycling | After cycling | | |
| Example | 1 | 198 | 166 | 385 | 1019 | 82 | acceptable |
| | 2 | 194 | 141 | 433 | 389 | 88 | acceptable |
| | 3 | 191 | 141 | 447 | 456 | 87 | acceptable |
| Comparative Example | 1 | 199 | 167 | 342 | 878 | 72 | unacceptable |
| | 2 | 199 | 152 | 472 | 711 | 74 | unacceptable |
| | 3 | 210 | 136 | 450 | 477 | 83 | unacceptable |
| | 4 | 197 | 103 | 590 | 526 | 80 | unacceptable |

It can be seen from Table 3 that lithium secondary batteries having excellent battery capacity, load characteristics, and long-life characteristics can be rendered possible with the lithium-nickel-manganese-cobalt composite oxide powders for a positive-electrode material for lithium secondary batteries of the invention, etc.

Furthemore, in the case of composite oxide powders in which no pores of 80-800 nm, excluding 800 nm, are observed like the powders of Comparative Examples 3 and 4, which gave a pore distribution curve in which the peak that should appear at 80-800 nm, excluding 800 nm, was not observed, primary particles of a compound having at least one element selected from the group consisting of As, Ge, P, Pb, Sb, Si, and Sn are less apt to be present at least in an inner part of the secondary particles. Even when such primary particles can be present, the cushioning effect of primary particles of a compound of P, Si, or the like during the expansion and contraction of particles in charge/discharge cycles is not produced since the secondary particles have no voids, such as those in the invention, in an inner part thereof and are too dense. Consequently, it is highly probable that the effect of the additive is not sufficiently produced, and it is presumed to be difficult to expect an improvement in battery characteristics.

It can be further seen that the lithium-nickel-manganese-cobalt composite oxide powders of the invention have small interstices among the active-material particles and have a high bulk density, as described above.

When such a powder is used as a positive-electrode material in a lithium secondary battery, it is possible to attain a reduction in cost, an increase in safety, and an increase in load characteristics and to attain an improvement in powder handleability due to an improvement in bulk density.

While the invention has been described in detail and with reference to specific embodiments thereof, it will be apparent to one skilled in the art that various changes and modifications can be made therein without departing from the spirit and scope thereof. This application is based on a Japanese patent application filed on January 8, 2010 (Application No. 2010-3187) and a Japanese patent application filed on June 17, 2010 (Application No. 2010-138447), the contents thereof being incorporated herein by reference.

Industrial Applicability

Applications of lithium secondary batteries employing the lithium-transition metal compound powders of the invention are not particularly limited, and batteries can be used in various known applications. Examples thereof include notebook personal computers, pen-input personal computers, mobile personal computers, electronic-book players, portable telephones, portable facsimile telegraphs, portable copiers, portable printers, headphone stereos, video movie cameras, liquid-crystal TVs, handy cleaners, portable CD players, mini-disk players, transceivers, electronic pocketbooks, electronic calculators, memory cards, portable tape recorders, radios, backup power supplies, motors, illuminators, toys, game machines, clocks and watches, stroboscopes, cameras, pace makers, power tools, power supplies for motor vehicles, power supplies for track vehicles, and power supplies for artificial satellites.

**Claims**

1. A lithium-transition metal compound powder for a positive-electrode material for lithium secondary battery, which comprises: secondary particles that are configured of primary particles having two or more compositions; and a lithium-transition metal compound having a function of being capable of insertion and release of lithium ions, wherein the powder gives a pore distribution curve having a peak at a pore radius of 80 nm or greater but less than 800 nm, and the secondary particles includes primary particles of a compound represented by a structural formula that includes at least one element selected from the group consisting of As, Ge, P, Pb, Sb, Si, and Sn, in which the primary particles of the compound are present at least in an inner part of the secondary particles.

2. A lithium-transition metal compound powder for a positive-electrode material for lithium secondary battery, which comprises: secondary particles that are configured of primary particles; and a lithium-transition metal compound having a function of being capable of insertion and release of lithium ions, wherein the powder is obtained by adding a compound represented by a structural formula that includes at least one element selected from the group consisting of As, Ge, P, Pb, Sb, Si and Sn, and a compound containing at least one element selected from Mo, W, Nb, Ta and Re to a starting material for the lithium-transition metal compound, and then burning the mixture.

3. A lithium-transition metal compound powder for a positive-electrode material for lithium secondary battery, which comprises: secondary particles that are configured of primary particles; and a lithium-transition metal compound having a function of being capable of insertion and release of lithium ions, wherein the powder is obtained by adding a compound represented by a structural formula that includes at least one element selected from the group consisting of As, Ge, P, Pb, Sb, Si and Sn to a starting material for the lithium-transition metal compound in an amount of 0.05-5% by mole based on the total amount of the starting material, and then burning the mixture at 950°C or higher.

4. The lithium-transition metal compound powder for a positive-electrode material for lithium secondary battery according to any one of claims 1 to 3, which, when examined by X-ray powder diffractometry using a CuKα ray, satisfies the relationship 0.01≤FWHM≤0.5, wherein the FWHM is a half-value width of a diffraction peak present at a diffraction angle 2θ of about 64.5°.

5. The lithium-transition metal compound powder for a positive-electrode material for lithium secondary battery according to any one of claims 1 to 4, wherein the atomic ratio of the sum of the at least one element selected from the group consisting of As, Ge, P, Pb, Sb, Si and Sn to the sum of lithium and the metallic elements other than the at least one element selected from the group consisting of As, Ge, P, Pb, Sb, Si, and Sn in structural formula in a surface part of the primary particles is 1-200 times the atomic ratio for the whole particles.

6. The lithium-transition metal compound powder for a positive-electrode material for lithium secondary battery according to any one of claims 1 to 5, which further comprises a compound having at least one element selected from Mo, W, Nb, Ta, and Re.

7. The lithium-transition metal compound powder for a positive-electrode material for lithium secondary battery according to any one of claims 1 to 6, which further comprises a compound containing at least one of element B and element Bi.

8. The powder for a positive-electrode material for lithium secondary battery according to any one of claims 1 to 7, wherein the lithium-transition metal compound is a lithium-nickel-manganese-cobalt composite oxide having a lamellar structure or a lithium-manganese composite oxide having a spinel structure.

9. The lithium-transition metal compound powder for a positive-electrode material for lithium secondary battery according to claim 8, wherein the lithium-nickel-manganese-cobalt composite oxide has a composition represented by the following composition formula (A) or (B).

$$Li_{1+x}MO_2 \hspace{4cm} (A)$$

(In formula (A), x is 0 to 0.5, and M is elements configured of Li, Ni, and Mn or of Li, Ni, Mn, and Co; the Mn/Ni molar ratio is 0.1-5; the Co/(Mn+Ni+Co) molar ratio is 0-0.35; and the molar ratio of Li in M is 0.001-0.2.)

$$Li[Li_aM_bMn_{2-b-a}]O_{4+\delta} \hspace{3cm} (B)$$

(In formula (B), a, b, and δ satisfy 0≤a≤0.3, 0.4<b<0.6, and -0.5<δ<0.5, and M represents at least one transition metal selected from Ni, Cr, Fe, Co, Cu, Zr, Al, and Mg.)

10. A process for producing a lithium-transition metal compound powder for a positive-electrode material for lithium secondary battery, the process comprising: a step in which a lithium compound, a compound of at least one transition metal selected from V, Cr, Mn, Fe, Co, Ni and Cu, and a compound represented by a structural formula that includes at least one element selected from the group consisting of As, Ge, P, Pb, Sb, Si and Sn, are pulverized in a liquid medium to prepare a slurry which contains these compounds evenly dispersed therein; a spray drying step in which the slurry is spray-dried; and a burning step in which the resultant spray-dried powder is burned at 950°C or higher in an oxygen-containing gas atmosphere.

11. The process for producing a lithium-transition metal compound powder for a positive-electrode material for lithium secondary battery according to claim 10, wherein in the slurry preparation step, the lithium compound, the transition metal compound, and the compound represented by a structural formula that includes at least one element selected from the group consisting of As, Ge, P, Pb, Sb, Si and Sn, are pulverized in the liquid medium until the particles come to have a median diameter, as measured under the following conditions, of 0.7 μm or less, and in the spray drying step, the spray drying is conducted under the conditions of 50 cP≤V≤10,000 cP and 500≤G/S≤10,000, wherein V (cP) is a viscosity of the slurry which is being subjected to the spray drying, S (L/min) is an amount of slurry feeding, and G (L/mm) is an amount of gas feeding.
(Median diameter measurement conditions are as follows:

i) an ultrasonic dispersion treatment is conducted at an output of 30 W and a frequency of 22.5 kHz for 5 minutes and thereafter

ii) a median diameter of the particles are measured by means of a laser diffraction/scattering type particle size distribution analyzer while setting the refractive index at 1.24, the particle diameter being determined on a volume basis.)

12. A positive electrode for lithium secondary battery, which comprises a positive-electrode active material layer and a current collector, the positive-electrode active material layer comprising a binder and either the powder for a positive-electrode material for lithium secondary battery according to any one of claims 1 to 9, or a lithium-transition metal compound powder for a positive-electrode material for lithium secondary battery which has been produced by the production process according to claims 10 and 11.

13. A lithium secondary battery comprising: a negative electrode that is capable of occluding and releasing lithium; a nonaqueous electrolyte that contains a lithium salt; and a positive electrode that is capable of occluding and releasing Lithium, wherein the positive electrode is the positive electrode for lithium secondary battery according to claim 12.

14. The lithium secondary battery according to claim 13, which has been designed so that the positive electrode in a fully charged state has a charging potential of 4.4 V (vs. Li/Li$^+$) or higher.

Fig. 1

Fig. 2

Fig. 3

Fig. 4

Fig. 5

Fig. 6

Fig. 7

Fig. 8

Fig. 9

6 μm       Electron Microscope Image 1

Spectrum 2

O

P

Full Scale 403 Count Cursor: -0.005 (1417 Counts)    keV

Fig. 10

Fig. 11

Electron Microscope Image 1

Full Scale 403 Count Cursor: -0.005 (1518 Counts)

Fig. 12

Fig. 13

6 μm                    Electron Microscope Image 1

Full Scale 403 Count Cursor: −0.005 (1539 Counts)

Fig. 14

Fig. 15

90326K    15KV    X10,000    15mm    1 μm

Fig. 16

Fig. 17

Fig. 18

Fig. 19

Fig. 20

Fig. 21

Fig. 22

Fig. 23

Fig. 24

## INTERNATIONAL SEARCH REPORT

| | International application No. |
|---|---|
| | PCT/JP2011/050210 |

A. CLASSIFICATION OF SUBJECT MATTER
*H01M4/525*(2010.01)i, *C01G53/00*(2006.01)i, *H01M4/131*(2010.01)i, *H01M4/36*
(2006.01)i, *H01M4/485*(2010.01)i, *H01M4/505*(2010.01)i, *H01M10/052*
(2010.01)i

According to International Patent Classification (IPC) or to both national classification and IPC

B. FIELDS SEARCHED

Minimum documentation searched (classification system followed by classification symbols)
H01M4/525, C01G53/00, H01M4/131, H01M4/36, H01M4/485, H01M4/505,
H01M10/052

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
JSTPlus/JMEDPlus/JST7580(JDreamII)

C. DOCUMENTS CONSIDERED TO BE RELEVANT

| Category* | Citation of document, with indication, where appropriate, of the relevant passages | Relevant to claim No. |
|---|---|---|
| X | JP 2009-289726 A  (Mitsubishi Chemical Corp.),<br>10 December 2009 (10.12.2009),<br>claims 1, 3, 18, 22; paragraph [0063]<br>& WO 2009/031619 A1    & EP 2202828 A1<br>& US 2010/0209771 A1 | 1-14 |
| X | JP 2001-273900 A  (Showa Denko Kabushiki<br>Kaisha),<br>05 October 2001 (05.10.2001),<br>claims 1, 4; paragraphs [0018], [0021]<br>& US 2001/0014421 A1 | 1-14 |
| A | JP 2009-280486 A  (JFE Chemical Corp.),<br>03 December 2009 (03.12.2009),<br>paragraph [0074]<br>& WO 2009/131161 A1 | 1-14 |

[X] Further documents are listed in the continuation of Box C.　　　[ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 March, 2011 (29.03.11) | 12 April, 2011 (12.04.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/050210

C (Continuation). DOCUMENTS CONSIDERED TO BE RELEVANT

| Category* | Citation of document, with indication, where appropriate, of the relevant passages | Relevant to claim No. |
|---|---|---|
| A | JP 2007-048525 A (Nissan Motor Co., Ltd.), 22 February 2007 (22.02.2007), paragraphs [0060], [0061] (Family: none) | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006073482 A
- JP 92319765 A
- JP 2008251434 A
- JP 9259863 A
- JP 2007048525 A
- JP 2001076724 A
- JP 2009076383 A
- JP 2010003187 A
- JP 2010138447 A